# EUROPEAN PATENT APPLICATION

(11) **EP 1 684 245 A2**
(43) Date of publication of application: **26.07.2006**
(21) Application number: 06000394.4
(22) Date of filing: 10.01.2006
(51) Int. Cl.: G07F 17/32

(54) **Gaming machine**

(30) Priority: 19.01.2005 JP 2005011250; 19.01.2005 JP 2005011251; 19.01.2005 JP 2005011252
(71) Applicant: Aruze Corp., Tokyo (JP)
(72) Inventor: Okada, Kazuo, Tokyo 135-0063 (JP)
(74) Representative: Grünecker, Kinkeldey, Stockmair & Schwanhäusser Anwaltssozietät

(57) **Abstract**

According to the manual adjustment mechanism 311, when the player grips the grip rail 302 provided on the lower LCD display 301 and pushes the grip rail 302 away from, or pulls the grip rail 302 towards, the player, the crests of the wave-shaped parts 322 formed on the bottom face of the frame 321 can simultaneously ride over the pair of primary rollers 331 and pair of secondary rollers 332, the lower LCD display 301 can be held while variously raised or lowered in a stepped manner, and the installation angle of the lower LCD display 301 in relation to the cabinet can be changed, each time a crest rides over the pair of primary rollers 331 and pair of secondary rollers 332.

## Description

### BACKGROUND OF THE INVENTION

### 1. Field of the Invention

The present invention relates to a games machine having a structure for ready viewing of displayed content.

### 2. Description of the Related Art

Previous games machines having a structure for ready viewing of displayed content are, for example, the games display device disclosed in Japanese Unexamined Patent Publication No. 2002-346032 (hereafter referred to as 'patent document 1'). The games display device disclosed in patent document 1 is provided with a transparent front cover, a display unit visible from the front through a front cover mounted rotatably in the frame of the games machine, and a part for manipulating the angle of rotation of the display unit provided in the front face of the games machine.

However, in the games display device disclosed in patent document 1, since the display unit is rotated via a drive source such as a motor and the like, even if the displayed content is readily seen, the condition was often subtly different from that desired by the player.

Therefore, an object of the present invention is to provide a games machine wherein the condition in which the displayed content is readily seen, and the condition desired by the player, can be made the same.

Furthermore, since the part for manipulating the angle of rotation of the display unit can be operated at any time, the unit was often subject to pranks by players and passersby and the like simply by rotating the display unit.

Therefore, a further object of the present invention is to provide a games machine wherein pranks by players and passersby and the like to readily view displayed content are prevented.

### SUMMARY OF THE INVENTION

The primary features provided in the present invention are a cabinet (for example, the cabinet 2), a display device (for example, the lower LCD display 301) installed in the cabinet (for example, the cabinet 2), a grip rail (for example, the grip rail 302) provided on the display unit (for example, the lower LCD display 301), and a manual adjustment mechanism (for example, the manual adjustment mechanism 311) for adjusting the angle of installation of the display unit (for example, the lower LCD display 301) in relation to the cabinet (for example, the cabinet 2) by moving manually the display unit (for example, the lower LCD display 301) via the grip rail (for example, the grip rail 302).

The secondary features provided in the present invention are a cabinet (for example, the cabinet 2), a display device (for example, the lower LCD display 301) installed in the cabinet (for example, the cabinet 2), an adjustment mechanism (for example, the adjustment mechanism 511) for adjusting the angle of installation of the display unit (for example, the lower LCD display 301) in relation to the cabinet (for example, the cabinet 2) using the drive source (for example, the drive source 525), manipulation means (for example, the control stick 503) for manipulating the adjustment mechanism (for example, the adjustment mechanism 511), and permitting means (for example, CPU 50, S76) for permitting manipulation of the adjustment mechanism (for example, the adjustment mechanism 511) with the manipulation means (for example, the control stick 503) from the time the predetermined conditions are established until completion of play.

The tertiary features provided in the present invention are a cabinet (for example, the cabinet 2), a display device (for example, the lower LCD display 301) installed in the cabinet (for example, the cabinet 2), an automatic adjustment mechanism (for example, the automatic adjustment mechanism 711) for automatically adjusting the angle of installation of the display unit (for example, the lower LCD display 301) in relation to the cabinet (for example, the cabinet 2), head position detection means (for example, the primary head position sensor group 703 and the like) detecting the position of the head of the player playing at the games machine (for example, the slot machine 601), storage media (for example, the ROM 51) storing a table to determine the angle of installation of the display device (for example, the lower LCD display 301) in relation to the cabinet (for example, the cabinet 2) according to the position of the head of the player playing at the games machine (for example, the slot machine 601), and permitting means (for example, CPU 50, S86) permitting automatic adjustment of the angle of installation of the display device (for example, the lower LCD display 301) in relation to the cabinet (for example, the cabinet 2) with the automatic adjustment mechanism (for example, the automatic adjustment mechanism 711) when the predetermined conditions are established, based on the detection results from head position detection means (for example, the primary head position sensor group 703 and the like) and the table in the storage media (for example, the ROM 51).

### BRIEF DESCRIPTION OF THE DRAWINGS

FIG. 1 is a side view showing the outline of the manual adjustment mechanism when the angle of installation of the lower LCD display in relation to the cabinet is the default angle, in the first embodiment.
FIG. 2 is a plan view showing the outline of the manual adjustment mechanism in the first embodiment.
FIG. 3 is a side view showing the outline of the components comprising the manual adjustment mechanism, and disposed on the cabinet side, in the first embodiment.
FIG. 4 is a side view showing the outline of the manual adjustment mechanism when the angle of installation of the lower LCD display in relation to the cabinet is one limit angle, in the first embodiment.
FIG. 5 is a side view showing the outline of the manual adjustment mechanism when the angle of installation of the lower LCD display in relation to the cabinet is the other limit angle, in the first embodiment.
FIG. 6 is a perspective view of the slot machine in the first embodiment.
FIG. 7 is a front view of the operation table in the first through third embodiments.
FIG. 8 is a schematic block diagram showing the control system of the slot machine in the first embodiment.
FIG. 9 is a block diagram showing the LCD display drive circuit in schematic format in the first through third embodiments.
FIG. 10 is a schematic descriptive diagram showing the columns of symbols variably displayed on the variable display units with base games in the first through third embodiments.
FIG. 11 is a descriptive diagram showing the winning combination and payouts for same in the first through third embodiments.
FIG. 12 is a diagram showing the stop and display regions in the five variable display units on the first through third embodiments.
FIG. 13 is a flowchart related to the main processing program in the first through third embodiments.
FIG. 14 is a flowchart related to the start receive processing program in the first embodiment.
FIG. 15 is a flowchart related to the lottery processing program in the first through third embodiments.
FIG. 16 is a flowchart related to the base game processing program in the first through third embodiments.
FIG. 17 is a flowchart related to the bonus game processing program in the first through third embodiments.
FIG. 18 is a flowchart related to the safety processing program in the first embodiment.
FIG. 19 is a side view showing the outline of the adjustment mechanism in the second embodiment.
FIG. 20 is a diagram showing an example of definition of the installation angle of the lower LCD display in relation to the cabinet in the second and third embodiments.
FIG. 21 is a perspective view of the slot machine in the second embodiment.
FIG. 22 is a schematic block diagram showing the control system of the slot machine in the second embodiment.
FIG. 23 is a flowchart of the start receive processing program in the second embodiment.
FIG. 24 is a side view showing the outline of the automatic adjustment mechanism in the third embodiment.
FIG. 25 is a diagram showing the control table in the third embodiment.
FIG. 26 is a perspective view of the slot machine in the third embodiment.
FIG. 27 is a schematic block diagram showing the control system of the slot machine in the third embodiment.
FIG. 28 is a flowchart of the start receive processing program in the third embodiment.

### DETAILED DESCRIPTION OF THE INVENTION

The first through third embodiments of the present invention as applied to a slot machine are described later in detail in reference to the drawings.

### [First Embodiment]

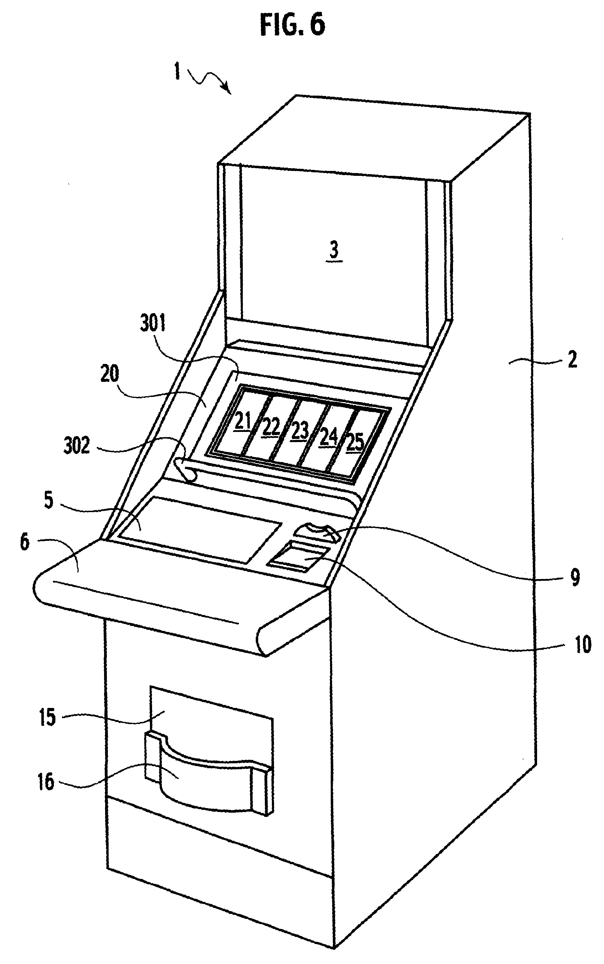

Firstly, the configuration in outline of the slot machine according to the first embodiment is described based on FIG 6 through FIG 12.

In FIG 6, the slot machine 1 has a slanted cabinet 2 forming the body of the slot machine 1 at which a player can play while seated, an upper LCD display 3 provided at the top of the front face of the cabinet 2, and a lower LCD display 301 provided in the front panel 20 of the unit provided at the center of the front face of the cabinet 2. Here, the upper LCD display 3 is comprised of a general-purpose LCD display, and the lower LCD display 301 is also comprised of a general-purpose LCD display. A grip rail 302 gripped by the player is provided on the lower LCD display 301 is described later. Information related to the game such as game method, winning combinations and payouts for same, and various effects and the like related to the game are displayed on the upper LCD display 3. Furthermore, credit is displayed, and as shown in FIG. 6, five variable display units 21, 22, 23, 24, and 25 are basically displayed, and various symbols described later are variably displayed from top to bottom while scrolling (hereafter also referred to as 'scroll display') in each variable display unit 21 through 25, and then stopped and displayed, on the lower LCD display 301.

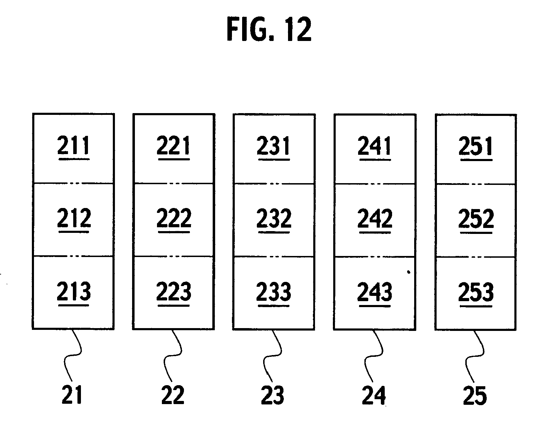

Therefore, in the slot machine 1 of the first embodiment, slot games (base games and bonus games) are played with video reels realized by display via the variable display units 21 through 25 of the lower LCD display 301. In this slot game (base game or bonus game), three symbols are stopped and displayed on each of the variable display units 21 through 25. That is to say, as shown in FIG. 12, the variable display units 21 through 25 are differentiated into the primary stop and display regions 211, 221, 231, 241, and 251, the secondary stop and display regions 212, 222, 232, 242, and 252, and the tertiary stop and display regions 213, 223, 233, 243, and 253, and symbols are stopped and displayed in each of the stop and display regions 211 through 213, 221 through 223, 231 through 233, 241 through 243, and 251 through 253.

Furthermore, this slot game (base game and bonus game) has twenty-five pay-lines formed in five stop and display regions 211 through 213, 221 through 223, 231 through 233, 241 through 243, and 251 through 253. When activated, payout is occurs if a specific symbol is queued in a specific mode when the symbols are stopped and displayed in each pay-line. A description of the twenty-five pay-lines is omitted.

Furthermore, the term 'game' refers to a sequence of operations including betting operation conducted based on currently held credit for base games, symbols variably displayed and stopped and displayed, and each processing (bonus game and payout processing) conducted in accordance with the combination of stopped and displayed symbols, and is distinct from bonus games.

Here, those of the twenty-five pay-lines activated are referred to as activated pay-lines'.

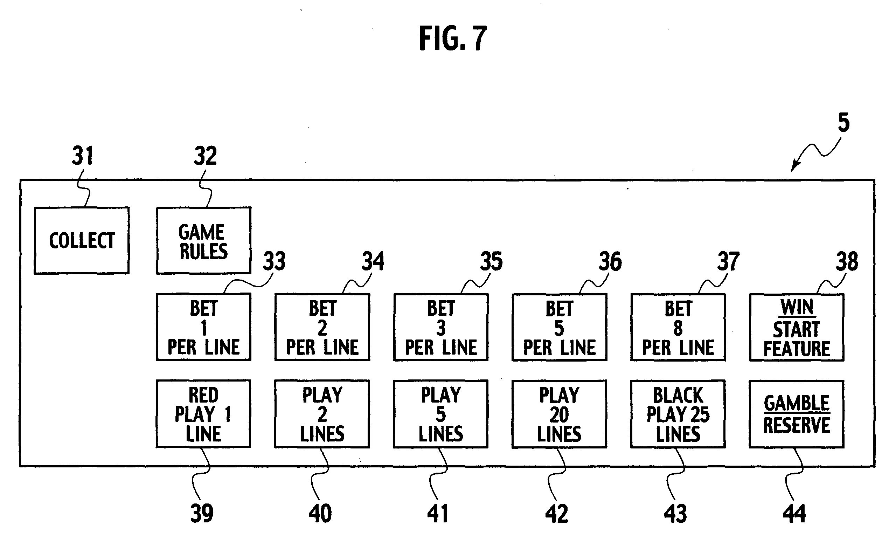

As shown in FIG 6, the operation table 5 and the armrest 6 projecting towards the player are provided at the bottom of the lower LCD display 301. As shown in FIG 7, the COLLECT button 31 and the GAME RULES button 32 are provided in that order from left in the upper stage of the operation table 5, the BET1 PER LINE button 33, BET2 PER LINE button 34, BET3 PER LINE button 35, BET5 PER LINE button 36, BET8 PER LINE button 37, and the WIN START FEATURE button 38 are provided in that order from left in the middle stage of the operation table 5, and the RED PLAY1 LINE button 39, the PLAY2 LINES button 40, the PLAY5 LINES button 41, the PLAY20 LINES button 42, the BLACK PLAY25 LINES button 43, and the GAMBLE RESERVE button 44 are provided in that order from left in the lower stage of the operation table 5. Furthermore, as shown in FIG. 6, the coin insertion slot 9, and the bill insertion slot 10, are provided at the right of the operation table 5.

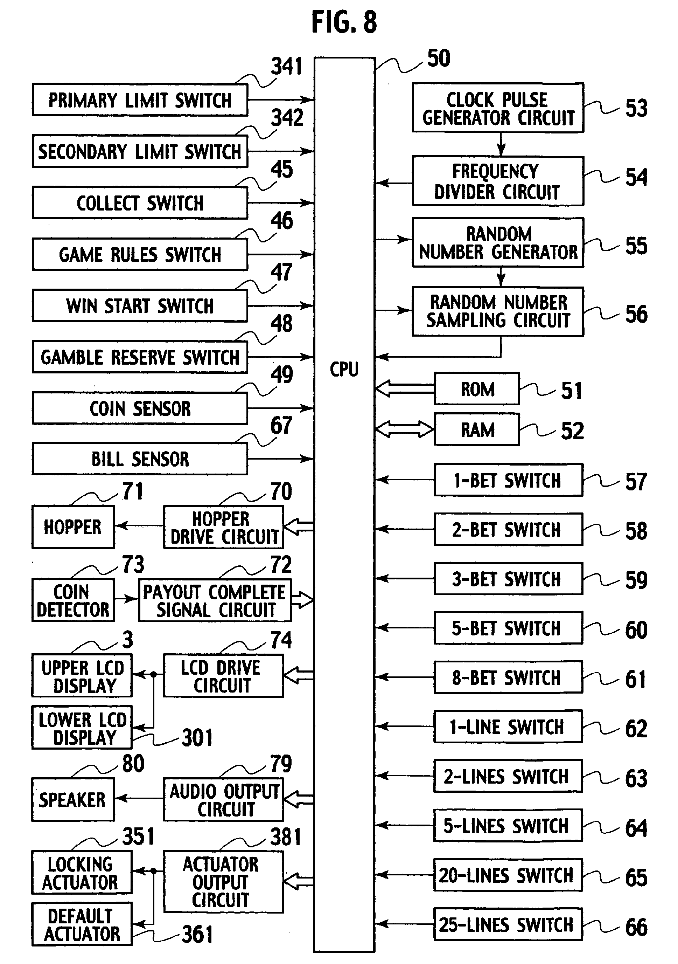

The COLLECT button 31 is pressed when the base game is completed. When the COLLECT button 31 is pressed, the equivalent value of the number of credits acquired in the game is refunded from the coin payout slot 15 to the coin receiver 16. A COLLECT switch 45 is fitted to the COLLECT button 31, and when the COLLECT button 31 is pressed, a switch signal is output from the COLLECT switch 45 to the CPU 50 (see FIG. 8).

The GAME RULES button 32 is pressed if the game rules are unclear. When the GAME RULES button 32 is pressed, various help information is displayed on the upper LCD display 3 and the lower LCD display 301. A GAME RULES switch 46 is fitted to the GAME RULES button 32, and when the GAME RULES button 32 is pressed, a switch signal is output from the GAME RULES switch 46 to the CPU 50 (see FIG. 8).

A coin sensor 49 is provided in a coin insertion slot 9, and when a coin is inserted in the coin insertion slot 9, a coin detect signal is output from the coin sensor 49 to the CPU 50 (see FIG. 8), and the credit equivalent to the inserted coin is added. Furthermore, a bill sensor 67 is provided in the bill insertion slot 10, and when a bill is inserted in the bill insertion slot 10, the bill detect signal is output from the bill sensor 67 to the CPU 50 (see FIG. 8), and the credit equivalent to the inserted bill is added.

Each time the BET1 PER LINE button 33 is pressed, each active pay-line is activated once. A 1-BET switch 57 is fitted to the BET1 PER LINE button 33, and when the BET1 PER LINE button 33 is pressed, a switch signal is output from the 1-BET switch 57 to the CPU 50 (see FIG 8). Each time the BET2 PER LINE button 34 is pressed, each active pay-line is activated twice. A 2-BET switch 58 is fitted to the BET2 PER LINE button 34, and when the BET2 PER LINE button 34 is pressed, a switch signal is output from the 2-BET switch 58 to the CPU 50 (see FIG 8).

Each time the BET3 PER LINE button 35 is pressed, each active pay-line is activated three times. A 3-BET switch 59 is fitted to the BET3 PER LINE button 35, and when the BET3 PER LINE button 35 is pressed, a switch signal is output from the 3-BET switch 59 to the CPU 50 (see FIG 8). Furthermore, each time the BET5 PER LINE button 36 is pressed, each active pay-line is activated five times. A 5-BET switch 60 is fitted to the BET5 PER LINE button 36, and when the BET5 PER LINE button 36 is pressed, a switch signal is output from the 5-BET switch 60 to the CPU 50 (see FIG 8).

Each time the BET8 PER LINE button 37 is pressed, each active pay-line is activated eight times. A 8-BET switch 61 is fitted to the BET8 PER LINE button 37, and when the BET8 PER LINE button 37 is pressed, a switch signal is output from the 8-BET switch 61 to the CPU 50 (see FIG 8). The number of bets activated in each line of the active pay-lines is therefore determined by pressing the BET1 PER LINE button 33, BET2 PER LINE button 34, BET3 PER LINE button 35, BET5 PER LINE button 36, and BET8 PER LINE button 37.

The WIN START FEATURE button 38 is for commencing a bonus game, and adding a payout acquired in a bonus game to the credit. A WIN START switch 47 is fitted to the WIN START FEATURE button 38, and when the WIN START FEATURE button 38 is pressed, a switch signal is output from the WIN START switch 47 to the CPU 50 (see FIG. 8).

When the RED PLAY1 LINE button 39 is pressed, a game is commenced with the number of active pay-lines as '1'. A 1-LINE switch 62 is fitted to the RED PLAY1 LINE button 39, and when the RED PLAY1 LINE button 39 is pressed, a switch signal is output from the 1-LINE switch 62 to the CPU 50 (see FIG. 8). Furthermore, when the PLAY2 LINES button 40 is pressed, a game is commenced with the number of active pay-lines as '2'. A 2-LINES switch 63 is fitted to the PLAY2 LINES button 40, and when the PLAY2 LINES button 40 is pressed, a switch signal is output from the 2-LINES switch 63 to the CPU 50 (see FIG. 8).

When the PLAY5 LINES button 41 is pressed, a game is commenced with the number of active pay-lines as '5'. A5-LINES switch 64 is fitted to the PLAY5 LINES button 41, and when the PLAY5 LINES button 41 is pressed, a switch signal is output from the 5-LINES switch 64 to the CPU 50 (see FIG. 8). Furthermore, when the PLAY20 LINES button 42 is pressed, a game is commenced with the number of active pay-lines as '20'. A 20-LINES switch 65 is fitted to the PLAY20 LINES button 42, and when the PLAY20 LINES button 42 is pressed, a switch signal is output from the 20-LINES switch 65 to the CPU 50 (see FIG. 8).

When the BLACK PLAY25 LINES button 43 is pressed, a game is commenced with the number of active pay-lines as '25'. A25-LINES switch 66 is fitted to the BLACK PLAY25 LINES button 43, and when the BLACK PLAY25 LINES button 43 is pressed, a switch signal is output from the 25-LINES switch 66 to the CPU 50 (see FIG. 8).

The number of active pay-lines can therefore be set as '1', '2', '5', '20', or '25' by pressing the RED PLAY1 LINE button 39, PLAY2 LINES button 40, PLAYS LINES button 41, PLAY20 LINES button 42, or BLACK PLAY25 LINES button 43.

Furthermore, when the RED PLAY1 LINE button 39, PLAY2 LINES button 40, PLAY5 LINES button 41, PLAY20 LINES button 42, or BLACK PLAY25 LINES button 43 is pressed, a game is commenced with the current number of bets and the number of relevant active pay-lines, and variable display of the symbols is commenced on the variable display units 21 through 25 on the lower LCD display 301.

The RED PLAY1 LINE button 39 and the BLACK PLAY25 LINES button 43 are also used to select red or black in double-down games conducted using credit acquired in bonus games.

The GAMBLE RESERVE button 44 is for pressing when leaving the seat, or when moving to a double-down game after completing a bonus game. A GAMBLE RESERVE switch 48 is fitted to the GAMBLE RESERVE button 44, and when the GAMBLE RESERVE button 44 is pressed, a switch signal is output from the GAMBLE RESERVE switch 48 to the CPU 50 (see FIG. 8).

Furthermore, as shown in FIG. 6, the coin payout slot 15 is formed, and the coin receiver 16 receiving the coins paid out from the coin payout slot 15 is provided, in the bottom of the cabinet 2. A coin detector 73 (described later, see FIG. 8) comprised of a sensor and the like is provided in the coin payout slot 15, and the coin detector 73 detects the number of coins paid out from the coin payout slot 15.

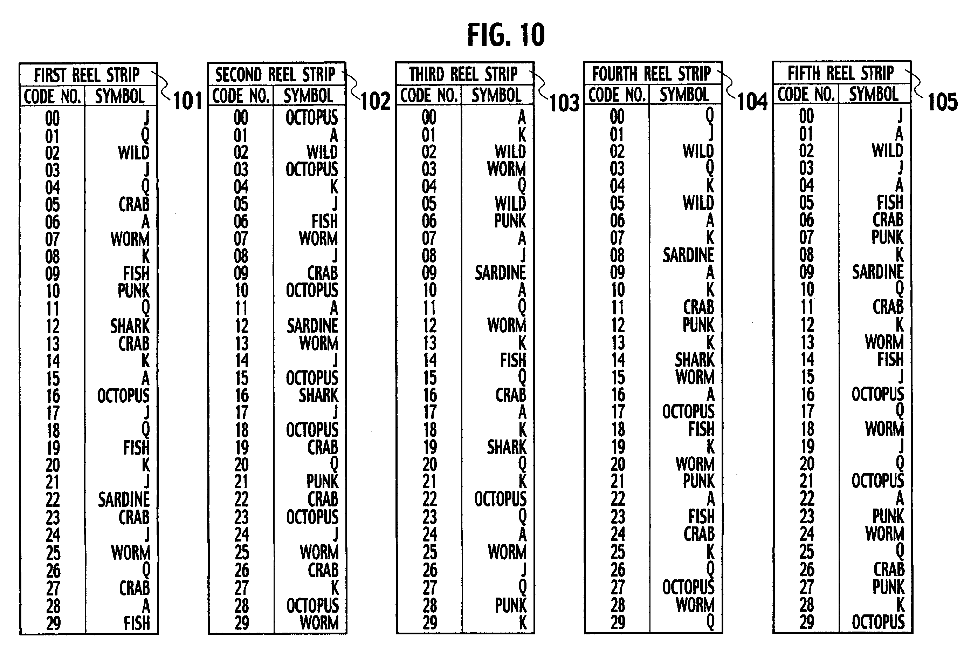

Examples of symbols variably displayed while scrolling on the variable display units 21 through 25 of the lower LCD display 301 when playing base games are described based on FIG. 10. In FIG. 10, the column of symbols shown in the first reel strip 101 is the column of symbols variably displayed with the variable display unit 21, the column of symbols shown in the second reel strip 102 is the column of symbols variably displayed with the variable display unit 22, the column of symbols shown in the third reel strip 103 is the column of symbols variably displayed with the variable display unit 23, the column of symbols shown in the fourth reel strip 104 is the column of symbols variably displayed with the variable display unit 24, and the column of symbols shown in the fifth reel strip 105 is the column of symbols variably displayed with the variable display unit 25.

Here, the columns of symbols shown in the reel strips 101 through 105 have arrays of mutually different symbols. These columns of symbols are comprised of the twelve symbols 'WILD', 'SHARK', 'FISH', 'PUNK', 'OCTOPUS', 'CRAB', 'WORM', 'A', 'K', 'Q', 'J', and 'SARDINE' in combinations.

The words 'SHARK', 'FISH', 'PUNK', 'OCTOPUS', 'CRAB', 'WORM', and 'SARDINE' correspond to symbols of a shark, a fish, a person holding a guitar, an octopus, a crab, a worm, and a sardine, which are displayed on the lower LCD display 301. 'WILD', 'A', 'K', 'Q', and 'J' are letter symbols.

As described later, 'SARDINE' is a scatter symbol for moving to bonus games. Movement to a bonus game is possible when three or more of the 'SARDINE' symbols are stopped and displayed on the variable display units 21 through 25, irrespective of activated pay-lines.

'WILD' is a wild card symbol and can substitute for any of 'SHARK', 'FISH', 'PUNK', 'OCTOPUS', 'CRAB', 'WORM', 'A', 'K', 'Q', or 'J'. 'WILD' cannot substitute for the scatter symbol 'SARDINE'.

When the columns of symbols shown in the reel strips 101 through 105 are stopped and displayed following scroll display on the variable display units 21 through 25, each of three symbols is stopped and displayed on the variable display units as described above.

Furthermore, each winning combination comprised of the aforementioned combination of symbols is preset, and when the combination of symbols corresponding to the winning combination is stopped on an active pay-line, operation is the same as for the conventional slot machine as far as payout for the winning combination being added to the credit, and a description is therefore omitted here.

Next, the configuration of the control system of the slot machine 1 is described based on FIG. 8.

In FIG. 8, the control system of the slot machine 1 is fundamentally comprised of a central CPU 50, with a ROM 51 and RAM 52 connected to the CPU 50. A main processing program, a base game processing program, a bonus game processing program, a primary lottery table for lottery of the base game stopped and displayed symbols, a secondary lottery of table for lottery the bonus game stopped and displayed symbols, and various programs and data tables and the like necessary for control of the slot machine 1, and described later, are stored in the ROM 51. Furthermore, the RAM 52 is a memory temporarily storing various data computed by the CPU 50.

Furthermore, a clock pulse generator circuit 53 generating a reference clock pulse, a frequency divider circuit 54, a random number generator 55 generating random numbers, and a random number sampling circuit 56, are connected to the CPU 50. Random numbers sampled with the random number sampling circuit 56 are used in various lottery of winning combinations and the like. Furthermore, the COLLECT switch 45 fitted to the COLLECT button 31, the GAME RULES switch 46 fitted to the GAME RULES button 32, the 1-BET switch 57 fitted to the BET1 PER LINE button 33, the 2-BET switch 58 fitted to the BET2 PER LINE button 34, 3-BET switch 59 fitted to the BET3 PER LINE button 35, the 5-BET switch 60 fitted to the BET5 PER LINE button 36, the 8-BET switch 61 fitted to the BET8 PER LINE button 37, the WIN START switch 47 fitted to the WIN START FEATURE button 38, the 1-LINE switch 62 fitted to the RED PLAY1 LINE button 39, the 2-LINES switch 63 fitted to the PLAY2 LINES button 40, the 5-LINES switch 64 fitted to the PLAY5 LINES button 41, the 20-LINES switch 65 fitted to the PLAY20 LINES button 42, the 25-LINES switch 66 fitted to the BLACK PLAY25 LINES button 43, and the GAMBLE RESERVE switch 48 fitted to the GAMBLE RESERVE button 44, are connected to the CPU 50. The CPU 50 conducts control to execute operations corresponding to buttons based on switch signal output from each switch when each button is pressed.

Furthermore, the coin sensor 49 provided in the coin insertion slot 9, and the bill sensor 67 provided in the bill insertion slot 10, are connected to the CPU 50. The coin sensor 49 detects coins inserted from the coin insertion slot 9, and the CPU 50 computes the number of coins inserted based on the coin detect signal output from the coin sensor 49. The bill sensor 67 detects the type and value of bills inserted from the bill insertion slot 10, and the CPU 50 computes the value of the bills, and the equivalent credit, based on the bill detect signal output from the bill sensor 67.

A hopper 71 is connected to the CPU 50 via a hopper drive circuit 70. When the drive signal is output to the hopper drive circuit 70 from the CPU 50, the hopper 71 pays out the predetermined number of coins to the coin payout slot 15.

Furthermore, the coin detector 73 is connected to the CPU 50 via a payout complete signal circuit 72. The coin detector 73 is provided in the coin payout slot 15, and when the predetermined number of coins is detected to have been paid out from the coin payout slot 15, the coin payout detect signal is output from the coin detector 73 to the payout complete signal circuit 72, and on this basis the payout complete signal circuit 72 outputs the payout complete signal to the CPU 50. Furthermore, the upper LCD display 3 and the lower LCD display 301 are connected to the CPU 50 via an LCD drive circuit 74, and the upper LCD display 3 and the lower LCD display 301 are controlled by the CPU 50.

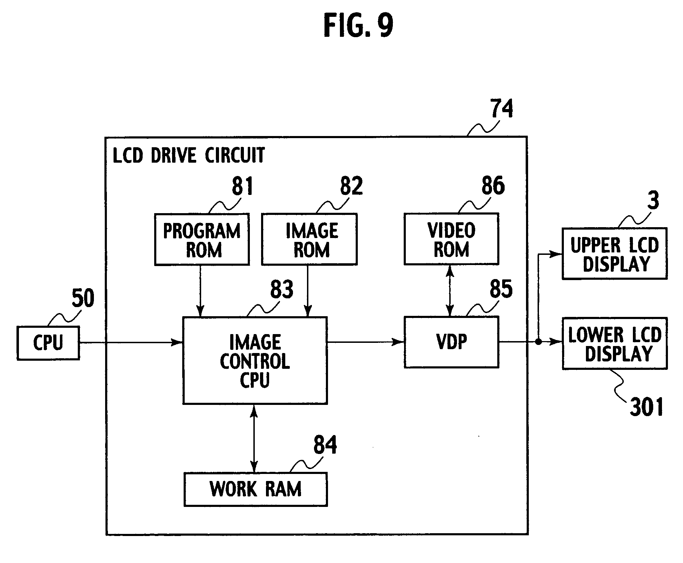

As shown in FIG. 9, the LCD drive circuit 74 is comprised of the program ROM 81, the image ROM 82, a image control CPU 83, a work RAM 84, a video display processor (VDP) 85, and a video RAM 86 and the like. The image control program, and various lottery tables related to display on the upper LCD display 3 and the lower LCD display 301 are stored in the program ROM 81. Furthermore, dot data for forming images, for example, the columns of symbols displayed in reel strips 101 through 105 in FIG. 10 and displayed on the lower LCD display 301 (or the variable display units 21 through 25), and demonstration screens and the like, are stored in the image ROM 82. Furthermore, the image control CPU 83 determines the images displayed on the upper LCD display 3 and the lower LCD display 301 from the dot data previously stored in the image ROM 82 in accordance with the image control program previously stored in the program ROM 81 based on the parameters set by the CPU 50. Furthermore, the work RAM 84 is configured as temporary storage means when the image control CPU 83 executes the image control program. Furthermore, the VDP 85 forms an image according to the display content determined by the image control CPU 83, and outputs this image to the upper LCD display 3 and the lower LCD display 301. Thus, for example, the columns of symbols and the like shown in the reel strips 101 through 105 are scroll displayed on the lower LCD display 301 (or the variable display units 21 through 25). The video RAM 86 is configured as temporary storage means when the image is formed with the VDP 85.

Furthermore, the audio output circuit 79 is connected to the CPU 50, and the speaker 80 is connected to the audio output circuit 79. The speaker 80 generates various sound effects when creating various effects based on the output signal from the audio output circuit 79.

Furthermore, the primary limit switch 341 and the secondary limit switch 342 are connected to the CPU 50. Furthermore, the locking actuator 351 and the default actuator 361 are connected to the CPU 50 via the actuator output circuit 381, and the locking actuator 351 and the default actuator 361 can be operated based on the signal output from the actuator output circuit 381 (described later).

The primary lottery table used when determining the symbols stopped and displayed on the activated pay-lines comprised of the secondary stop and display regions 212, 222, 232, 242, and 252 of the variable display units 21 through 25 when playing a base game using the five variable display units 21 through 25 in the slot machine 1, is described below.

The symbols stopped and displayed on the activated pay-lines comprised of the secondary stop and display regions 212, 222, 232, 242, and 252 of the variable display units 21 through 25 are determined for each of the variable display units 21 through 25. Thus, the symbols are scroll displayed on the variable display units 21 through 25, and while code numbers '0' through '29' are allocated sequentially one at a time from the top for each column of symbols displayed on the reel strips 101 through 105 in FIG. 10, in the primary lottery table, a random value is allocated to each code number, and by sampling five random values via the random number sampling circuit 56 to ensure correspondence with each variable display unit 21 through 25, the symbols stopped and displayed on the relevant activated pay-line are determined. For example, the primary random numbers are sampled using the random number sampling circuit 56. Next, the code numbers for the primary random numbers are evaluated based on the primary lottery table. The code numbers corresponding to the primary random numbers then stop and display the allocated symbols in the secondary stop and display region 212 of the variable display unit 21. Similarly, the second through fifth symbols stopped and displayed in the secondary stop and display regions 222 through 252 can be determined.

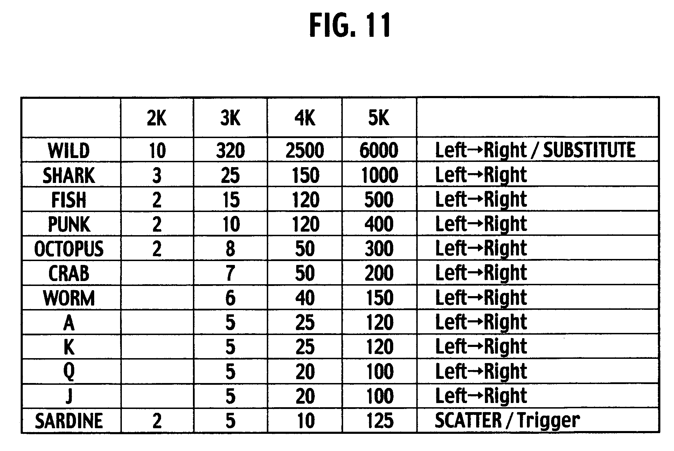

Next, the winning combination and payout for same when playing a base game using the five variable display units 21 through 25 in the slot machine 1 are described below based on FIG. 11. FIG. 11 is a descriptive diagram showing the winning combination and payout for same when playing a base game using the five variable display units, and shows the payout when the number of bets is '1'. When, therefore, the number of bets is '1', the value of the payout shown in FIG. 11 is added to the credit, however when the number of bets is '2' or greater, the value of the payout shown in FIG. 11 multiplied by the relevant number of bets is added to the credit.

The winning combination and payout for same when a base game is played is described below in practical detail. As shown in FIG. 11, when the 'WILD' symbol is stopped and displayed consecutively in the activated pay-lines in variable display units 21 and 22 ('2K' means that 'WILD' symbol appears twice consecutively from the left edge), a payout of '10' is obtained. Furthermore, when this symbol is stopped and displayed consecutively in the activated pay-lines in variable display units 21 through 23 ('3K' means that 'WILD' symbol appears three times consecutively from the left edge), a payout of '320' is obtained. Furthermore, when this symbol is stopped and displayed consecutively in the activated pay-lines in variable display units 21 through 24 ('4K' means that 'WILD' symbol appears four times consecutively from the left edge), a payout of '2500' is obtained. Furthermore, when this symbol is stopped and displayed consecutively in the activated pay-lines in variable display units 21 through 25 ('5K' means that 'WILD' symbol appears five times consecutively from the left edge), a payout of '6000' is obtained.

Furthermore, when the 'SHARK' symbol is stopped and displayed consecutively in the activated pay-lines in variable display units 21 and 22 ('2K' means that 'WILD' symbol appears twice consecutively from the left edge), a payout of '3' is obtained. Furthermore, when this symbol is stopped and displayed consecutively in the activated pay-lines in variable display units 21 through 23 ('3K' means that 'WILD' symbol appears three times consecutively from the left edge), a payout of '25' is obtained. Furthermore, when this symbol is stopped and displayed consecutively in the activated pay-lines in variable display units 21 through 24 ('4K' means that 'WILD' symbol appears four times consecutively from the left edge), a payout of '150' is obtained. Furthermore, when this symbol is stopped and displayed consecutively in the activated pay-lines in variable display units 21 through 25 ('5K' means that 'WILD' symbol appears five times consecutively from the left edge), a payout of '1000' is obtained.

As described above, the 'WILD' symbol can also substitute for the 'SHARK' symbol.

Similarly, payouts for the 'FISH' symbol, the 'PUNK' symbol (person holding a guitar), the 'OCTOPUS' symbol, the 'CRAB' symbol, the 'WORM' symbol, the 'A' symbol (a letter), the 'K' symbol (a letter), the 'Q' symbol (a letter), and the 'J' symbol (a letter) are set as shown in FIG. 11, and can be substituted by the 'WILD' symbol.

When these symbols are arrayed in a plurality of activated pay-lines, and a plurality of payouts may be obtained, the total value of all payouts is added to the credit.

On the other hand, with the 'SARDINE' symbol, a payout of '2' is obtained when 'SARDINE' symbol appears twice (stopped and displayed) consecutively from the left edge, a payout of '5' is obtained when 'SARDINE' symbol appears three times (stopped and displayed) consecutively from the left edge, a payout of '10' is obtained when 'SARDINE' symbol appears four times (stopped and displayed) consecutively from the left edge, and a payout of '125' is obtained when 'SARDINE' symbol appears five times (stopped and displayed) consecutively from the left edge, irrespective of the activated pay-lines on the variable display units 21 through 25.

The payout value shown in FIG. 11 is multiplied by the total number of bets (product of the number of bets and the number of activated pay-lines) only for payouts with the 'SARDINE' symbol. When payouts are also made with other than the 'SARDINE' symbol, the payout is also added to the credit in this case.

Furthermore, with the 'SARDINE' symbol, the aforementioned payout is obtained, and the player can move to a bonus game when the 'SARDINE' symbol appears three or more times (stopped and displayed), irrespective of the activated pay-lines on the variable display units 21 through 25.

A bonus game is a game played after a base game, and is frequently advantageous to the player. Here, when the player moves to a bonus game, between 15 and 25 consecutive games are played automatically, without betting the credit, according to the results of the lottery at the time of moving to the bonus game.

In the slot machine 1 of the first embodiment, the columns of symbols variably displayed on the variable display unit 21 of the lower LCD display 301 while scrolling when playing a bonus game are the columns of symbols shown on the reel strips 101 through 105 in FIG. 10, and are the same as used in base games.

The number of bets and number of activated pay-lines when moving to a bonus game are each used during the bonus game. Furthermore, the winning combination and payout for same in a bonus game are the same as for base games, however the 'SHARK' symbol is handled as the 'WILD' symbol (a letter), and when the 'SARDINE' symbol appears three or more times (stopped and displayed), the player can move to a bonus game again. The player can therefore often acquire considerable credit.

However, as shown in FIG 6, in the slot machine 1 of the first embodiment the lower LCD display 301 is installed in the cabinet 2, however when the player moves the lower LCD display 301 by gripping the grip rail 302 of the lower LCD display 301, the angle of installation of the lower LCD display 301 in relation to the cabinet 2 can be adjusted manually in steps.

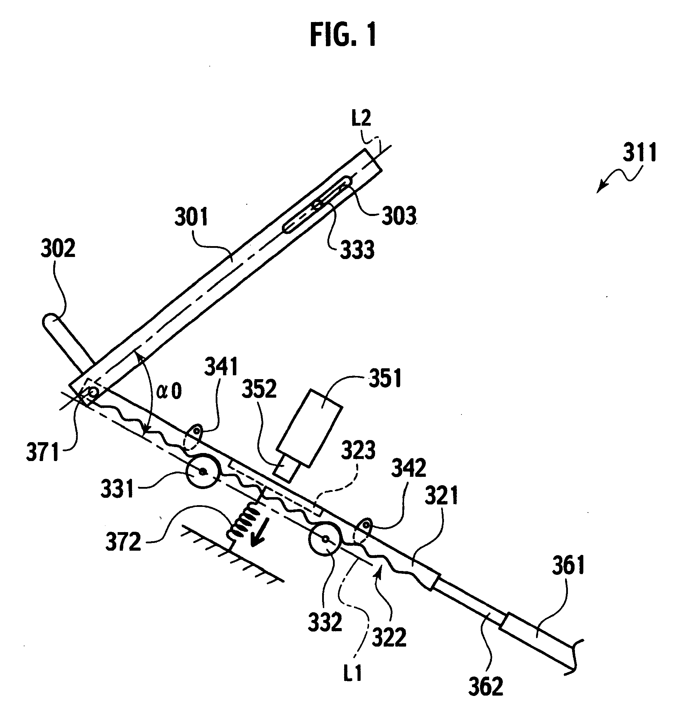

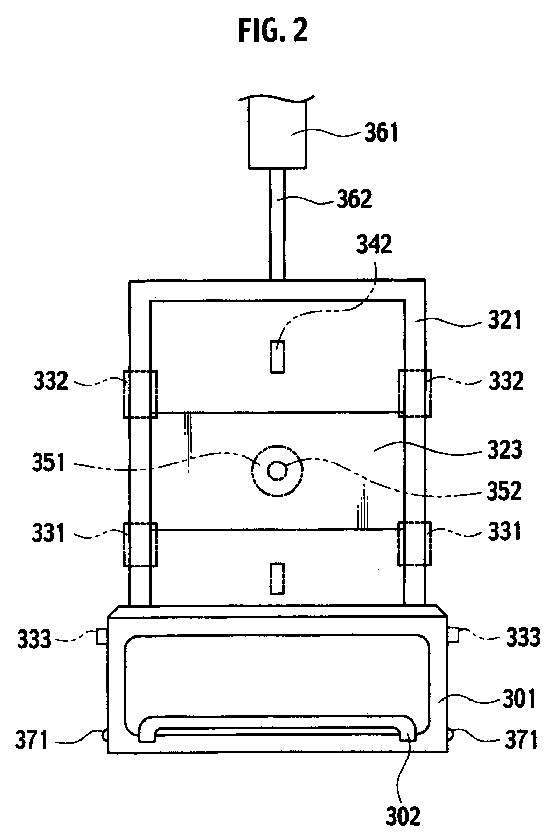

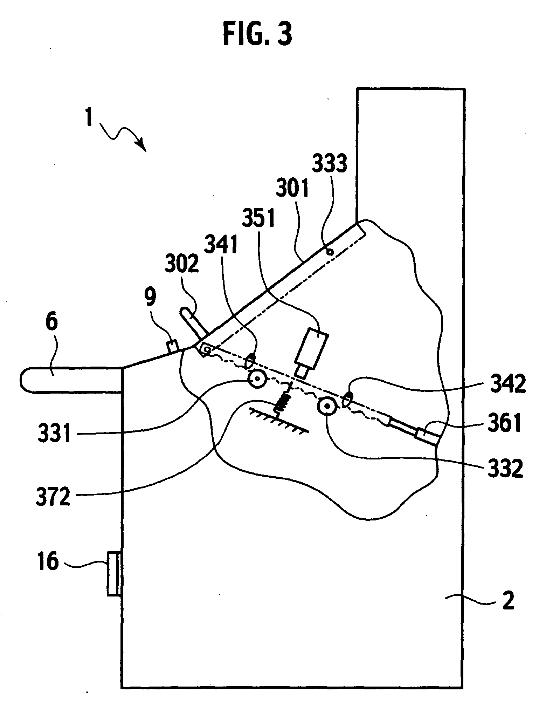

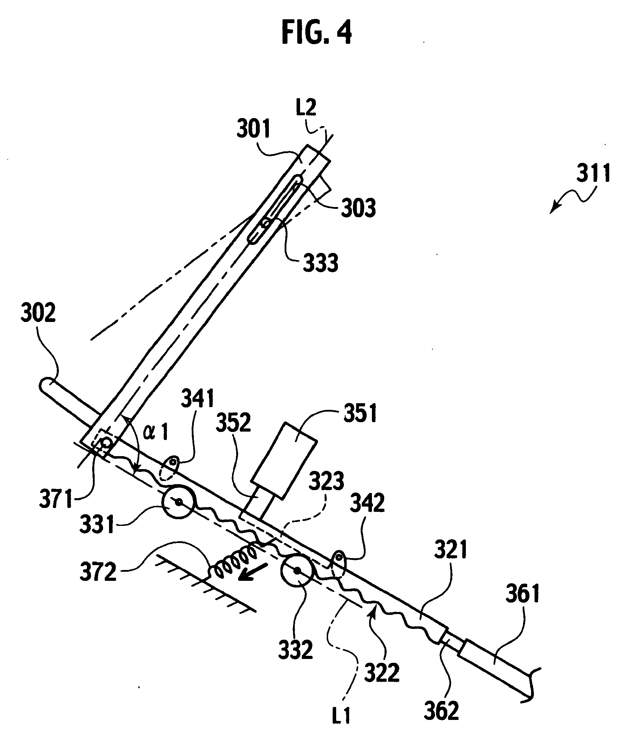

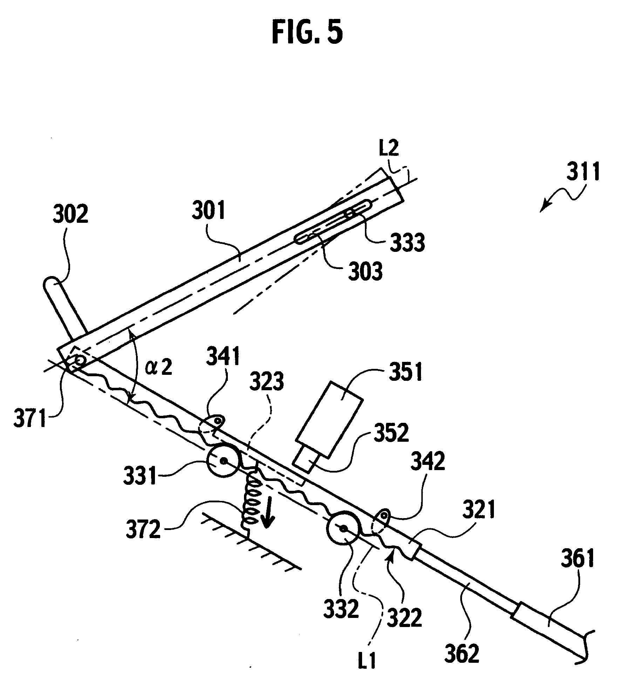

The manual adjustment mechanism installed in the slot machine 1 of the first embodiment for realizing this adjustment is described based on FIG. 1 through FIG. 5. FIG. 1 is a side view showing the outline of the manual adjustment mechanism when the angle of installation of the lower LCD display in relation to the cabinet is the default angle. FIG 2 is a plan view showing the outline of the manual adjustment mechanism. FIG. 3 is a side view showing the outline of the components comprising the manual adjustment mechanism, and disposed on the cabinet side. FIG. 4 is a side view showing the outline of the manual adjustment mechanism when the angle of installation of the lower LCD display in relation to the cabinet is one limit angle. FIG. 5 is a side view showing the outline of the manual adjustment mechanism when the angle of installation of the lower LCD display in relation to the cabinet is the other limit angle.

As shown in FIG. 2 and FIG 3, in the manual adjustment mechanism 311, a pair of projections 333, a pair of primary rollers 331, a pair of secondary rollers 332, a primary limit switch 341, a secondary limit switch 342, a locking actuator 351, a default actuator 361, and one end of an energizing spring 372, are provided appropriately on the cabinet 2 side.

Furthermore, as shown in FIG. 1 through FIG. 5, in the manual adjustment mechanism 311, the lower LCD display 301 wherein the grip rail 302 is provided is rotatably supported on the axis by a pair of rotation pins 371 at the tip of the frame 321.

A guide groove 303 is provided on both side faces of the lower LCD display 301, and the pair of projections 333 provided on the cabinet 2 side are inserted in the guide grooves 303. Thus, movement of the lower LCD display 301 is restricted.

On the other hand, wave-shaped parts 322 are formed on the bottom face of the frame 321, and the frame 321 is mounted on the pair of primary rollers 331 and the pair of secondary rollers 332 provided on the cabinet 2 side via the wave-shaped parts 322. Furthermore, the locking plate 323 is fixed in the center of the frame 321, and the other end of the energizing spring 372 provided in the cabinet 2 is fixed to this locking plate 323.

Since the frame 321 mounted on the pair of primary rollers 331 and the pair of secondary rollers 332 is pressed against the pair of primary rollers 331 and the pair of secondary rollers 332 by the energizing spring 372, the tops of the pair of primary rollers 331 and the pair of secondary rollers 332 are retained in the troughs of the wave-shaped parts 322 formed in the bottom face of the frame 321, and thus the position of the lower LCD display 301 rotatably supported on the axis by the tip of the frame 321 is maintained.

Here, since the pair of primary rollers 331 and the pair of secondary rollers 332 are provided on and fixed to the cabinet 2 side, for convenience in the description, the angle of intersection of the straight line L1 passing through the axis of rotation of the pair of primary rollers 331 and the axis of rotation of the pair of secondary rollers 332, and the straight line L2 through the center of the lower LCD display 301, is defined as the angle of installation of the lower LCD display 301 in relation to the cabinet 2. Furthermore, the installation angle α0 shown in FIG 1 is the default angle.

In the manual adjustment mechanism 311, when the player grips the grip rail 302 provided on the lower LCD display 301 and pushes the grip rail 302 away from, or pulls the grip rail 302 towards, the player, since the crests of the wave-shaped parts 322 formed on the bottom face of the frame 321 can simultaneously ride over the pair of primary rollers 331 and pair of secondary rollers 332, the installation angle of the lower LCD display 301 in relation to the cabinet 2 can be changed each time a crest rides over the pair of primary rollers 331 and pair of secondary rollers 332.

When the player grips the grip rail 302 provided on the lower LCD display 301 and continues pushing it away from the player, the manual adjustment mechanism 311 moves to the condition shown in FIG. 4. At this time, as shown in FIG. 4, since the locking plate 323 of the frame 321 butts against the secondary limit switch 342, the detect signal is issued from the secondary limit switch 342. When the CPU 50 (see FIG. 8) detects the detect signal from the secondary limit switch 342, the locking actuator 351 provided on the cabinet 2 side is actuated, pressing the locking plate 323 of the frame 321 with the rod 352 of the locking actuator 351. Thus, since the condition wherein the top parts of the pair of primary rollers 331 and pair of secondary rollers 332 are in the troughs of the wave-shaped parts 322 formed on the bottom face of the frame 321 is fixed, the position of the lower LCD display 301 supported rotatably on the axis at the tip of the frame 321 is also fixed.

Therefore, when the installation angle α1 shown in FIG 4 is set to the primary limit angle, and the player continues pushing the grip rail 302 provided on the lower LCD display 301 away from the player, the installation angle of the lower LCD display 301 in relation to the cabinet 2 can be increased to the primary limit angle α1, that is to say, the lower LCD display 301 can be raised.

On the other hand, when the player continues pulling the grip rail 302 provided on the lower LCD display 301 towards the player, the manual adjustment mechanism 311 moves to the condition shown in FIG. 5. At this time, as shown in FIG. 5, since the locking plate 323 of the frame 321 butts against the primary limit switch 341, the detect signal is issued from the primary limit switch 341. When the CPU 50 (see FIG. 8) detects the detect signal from the primary limit switch 341, the locking actuator 351 provided on the cabinet 2 side is actuated, pressing the locking plate 323 of the frame 321 with the rod 352 of the locking actuator 351. Thus, since the condition in which the top parts of the pair of primary rollers 331 and pair of secondary rollers 332 are in the troughs of the wave-shaped parts 322 formed on the bottom face of the frame 321 is fixed, the position of the lower LCD display 301 supported rotatably on the axis with the tip of the frame 321 is also fixed.

Therefore, when the installation angle α2 shown in FIG. 5 is set to the secondary limit angle, and the player continues pulling the grip rail 302 provided on the lower LCD display 301 towards the player, the installation angle of the lower LCD display 301 in relation to the cabinet 2 can be reduced to the secondary limit angle α2, that is to say, the lower LCD display 301 can be lowered.

As described above, since the fact that the installation angle of the lower LCD display 301 in relation to the cabinet 2 is the primary limit angle α1 shown in FIG. 4, or the secondary limit angle α2 shown in FIG. 5, can be detected with the secondary limit switch 342 or the primary limit switch 341, the secondary limit switch 342 and primary limit switch 341 function as 'position detection means' detecting the position of the lower LCD display 301. The position of the lower LCD display 301 may also be detected directly with an infrared sensor and the like, and indirectly with an encoder and the like provided on the rotation pins 371 for direct detection.

Furthermore, as shown in FIG. 1 through FIG 5, the rod 362 of the default actuator 361 provided on the cabinet 2 side is fixed on the bottom edge of the frame 321, and when a slot game (base game or bonus game) is complete, the CPU 50 (see FIG. 8) actuates the default actuator 361, the manual adjustment mechanism 311 is moved to the condition shown in FIG. 1, and the installation angle of the lower LCD display 301 in relation to the cabinet 2 is automatically restored to the default angle α0.

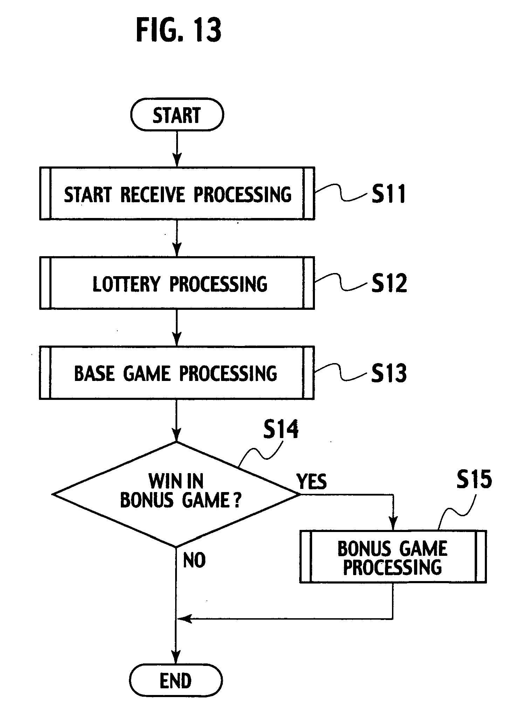

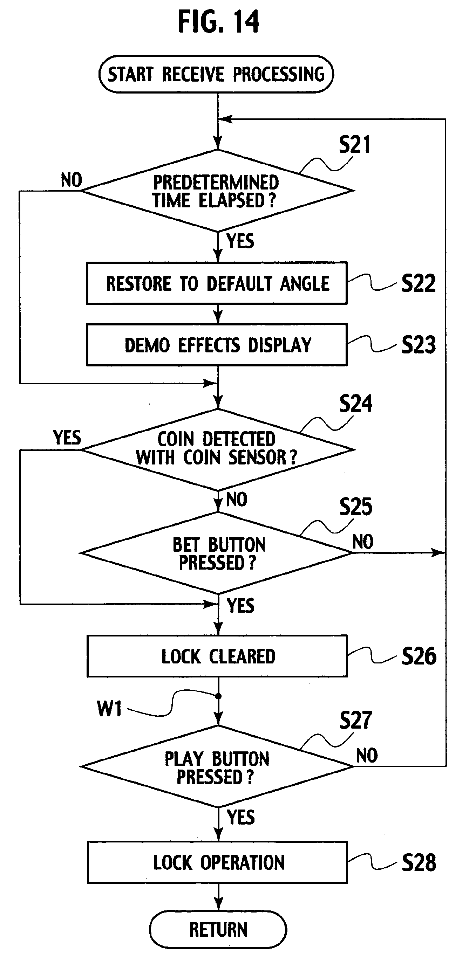

The main processing program run on the slot machine 1 is described based on FIG. 13. FIG. 13 is a flowchart related to the main processing program. In FIG. 13, the start receive processing in FIG. 14 and described later is conducted first in step (hereafter abbreviated by 'S') 11. This processing receives switch signals output from the 1-BET switch 57, the 2-BET switch 58, the 3-BET switch 59, the 5-BET switch 60, the 8-BET switch 61, the 1-LINE switch 62, the 2-LINES switch 63, the 5-LINES switch 64, the 20-LINES switch 65, and the 25-LINES switch 66 based on operation of the BET1 PER LINE button 33, the BET2 PER LINE button 34, the BET3 PER LINE button 35, the BET5 PER LINE button 36, the BET8 PER LINE button 37, the RED PLAY1 LINE button 39, the PLAY2 LINES button 40, the PLAY5 LINES button 41, the PLAY20 LINES button 42, or the BLACK PLAY25 LINES button 43, and the coin detect signal from the coin sensor 49. A game is commenced when a switch signal output from each switch is received.

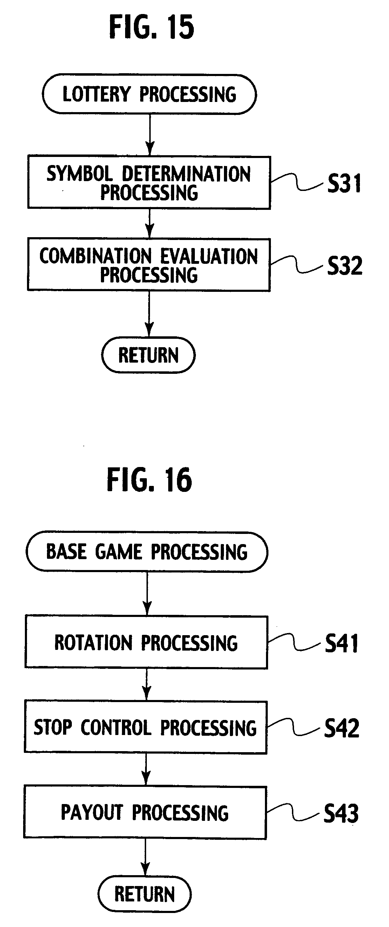

In S12, the lottery processing shown in FIG. 15 and described later is run based on the switch signals output from the 1-LINE switch 62, the 2-LINES switch 63, the 5-LINES switch 64, the 20-LINES switch 65, and the 25-LINES switch 66.

Here, when winning a bonus game, the number of bonus game repetitions is determined, for example, selected by sampling from any of between 10 and 25 games.

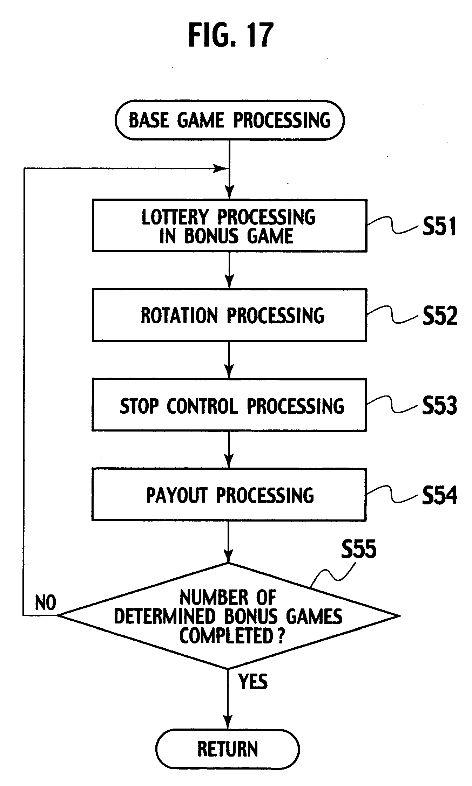

Next, in S13, the base game processing shown in FIG. 16 and described later is run. Processing then proceeds to S14 and an evaluation is made to determine whether or not a win was obtained in the bonus game. In practice, in the lottery processing in S12, since three or more of the 'SARDINE' symbols appearing (stopped and displayed) on the variable display units 21 through 25, irrespective of activated pay-lines, is a win in a bonus game (YES in S14), processing proceeds to S15, the bonus game processing shown in FIG. 17 and described later is run, and the main processing program is completed. On the other hand, in the lottery processing in S12, since three or more of the 'SARDINE' symbols not appearing (stopped and displayed) on the variable display units 21 through 25, irrespective of activated pay-lines, is not a win in a bonus game (NO in S14), the main processing program is completed.

The start receive processing program run on the slot machine 1 is described based on FIG. 14. FIG. 14 is a flowchart related to the start receive processing program. In S11 of the main processing program shown in FIG. 13, when start receive processing is run, an evaluation is first made in S21 in FIG. 14 of whether or not the predetermined time (for example, 15 seconds) has elapsed after completion of the immediately previous slot game (base game or bonus game). If the predetermined time has not elapsed (NO in S21), processing proceeds immediately to S24 without further action, and if the predetermined time has elapsed (YES in S21), the default angle is restored in S22. That is to say, the default actuator 361 is actuated, the manual adjustment mechanism 311 moved to the condition shown in FIG. 1, and the installation angle of the lower LCD display 301 in relation to the cabinet 2 is automatically restored to the default angle α0. Furthermore, the locking actuator 351 is actuated, pressing the locking plate 323 of the frame 321 with the rod 352 of the locking actuator 351. Thus, the installation angle of the lower LCD display 301 in relation to the cabinet 2 is fixed at the default angle α0. The demo effects are then displayed on the upper LCD display 3 and lower LCD display 301 in S23, and the demonstration image is displayed.

In S24, an evaluation is made to determine whether or not the coin sensor 49 has detected a coin. This evaluation is conducted by evaluating whether or not the coin detect signal has been received from the coin sensor 49. When the coin sensor 49 has detected a coin (YES in S24), no action is taken and processing proceeds to S26. When the coin sensor 49 has not detected a coin (NO in S24), processing proceeds to S25.

In S25, an evaluation is made to determine whether or not the BET1 PER LINE button 33, the BET2 PER LINE button 34, the BET3 PER LINE button 35, the BET5 PER LINE button 36, or the BET8 PER LINE button 37 has been operated. Here, when the BET1 PER LINE button 33 and the like have not been operated (NO in S25), processing returns to S21, and the aforementioned processing is repeated. On the other hand, if the BET1 PER LINE button 33 and the like have been operated (YES in S25), processing proceeds to S26.

The lock is cleared in S26. That is to say, the locking actuator 351 is actuated, moving the rod 352 of the locking actuator locking actuator 351 off the locking plate 323 of the frame 321. Thus, when the player grips the grip rail 302 provided on the lower LCD display 301 and pushes the grip rail 302 away from, or pulls the grip rail 302 towards the player, since the crests of the wave-shaped parts 322 formed on the bottom face of the frame 321 can simultaneously ride over the pair of primary rollers 331 and pair of secondary rollers 332, the installation angle of the lower LCD display 301 in relation to the cabinet 2 can be changed each time a crest rides over the pair of primary rollers 331 and pair of secondary rollers 332.

In S27, an evaluation is made to determine whether or not the RED PLAY1 LINE button 39, the PLAY2 LINES button 40, the PLAY5 LINES button 41, the PLAY20 LINES button 42, or the BLACK PLAY25 LINES button 43 has been operated. Here, when the RED PLAY1 LINE button 39 and the like have not been operated (NO in S27), processing returns to S21, and the aforementioned processing is repeated. On the other hand, when the RED PLAY1 LINE button 39 and the like have been operated (YES in S27), processing proceeds to S28.

The lock is actuated in S28. That is to say, the locking actuator 351 is actuated, pressing the locking plate 323 of the frame 321 with the rod 352 of the locking actuator 351. Thus, the installation angle of the lower LCD display 301 in relation to the cabinet 2 is fixed at the angle at that time.

Processing then returns to the main processing program shown in FIG. 13 even if demo effects are currently displayed, and proceeds to the lottery processing in S12.

In the evaluation processing in S27, evaluation can be not only with the operation signal, but also with other signals (for example, the signal instructing start of reel rotation).

Thus, when the CPU 50 executes S23, the CPU 50 functions as 'image control means'. When the CPU 50 executes S26, the CPU 50 functions as 'clearing means'.

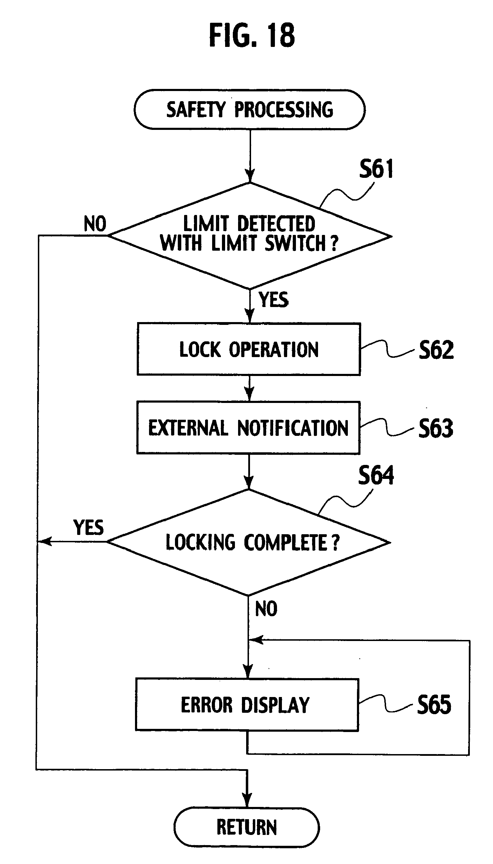

The safety processing shown in FIG 18 is run at the point in time W1 between S26 and S27. FIG. 18 is a flowchart related to the safety processing program. In the safety processing shown in FIG. 18, firstly, the limit switch detects whether or not the frame has reached the limit angle in S61. In practice, the frame reaching the limit angle is detected by evaluating whether or not the CPU 50 has received the detect signal issued when the primary limit switch 341 or the secondary limit switch 342 detect the locking plate 323 of the frame 321. At this time, when the limit switches have not detected the locking plate 323 of the frame 321 (NO in S61), processing returns to the start receive processing in FIG. 14 without further action, and proceeds to S27.

On the other hand, when a limit switch has detected the locking plate 323 of the frame 321 (YES in S61), processing proceeds to S62, and the lock is actuated. That is to say, as shown in FIG. 4 and FIG. 5, the locking actuator 351 is actuated, pressing the locking plate 323 of the frame 321 with the rod 352 of the locking actuator 351, and thus the installation angle of the lower LCD display 301 in relation to the cabinet 2 is fixed at the primary limit angle α1 or secondary limit angle α2.

External notification is conducted in S63. For example, the fact that the installation angle of the lower LCD display 301 in relation to the cabinet 2 has reached the primary limit angle α1 or secondary limit angle α2 is displayed on the lower LCD display 301, and a sound is emitted from the speaker 80.

Completion of locking is checked in S64. When locking is complete, processing returns to the processing shown in FIG. 14, and proceeds to S27. When locking is not complete, an error is displayed on the upper LCD display 3, processing is interrupted, and games cannot be played (S65).

Next, the lottery processing program run on the slot machine 1 is described based on FIG. 15. FIG. 15 is a flowchart related to the lottery processing program. Lottery processing is run in S12 of the main processing program shown in FIG. 13, however this requires that processing first proceed to S31 in FIG. 15 to run symbol determination processing. Here, in base games, symbols stopped and displayed on the primary activated pay-line are determined for each of the variable display units 21 through 25. In practice, as described above, five random numbers corresponding to the variable display units 21 through 25 are sampled with the random number sampling circuit 56, and the stopped and displayed symbols determined via the code numbers based on the primary lottery table. Combination evaluation processing is run in S32 when symbols stopped and displayed on the primary activated pay-line are determined. The winning combination and payout for same are determined in combination evaluation processing based on the table in FIG. 11. Following combination evaluation, processing returns to the main processing program in FIG. 13, and proceeds to the base game processing in S13.

The primary activated pay-line is the activated pay-line comprising the secondary stop and display regions 212, 222, 232, 242, and 252.

Next, the base game processing program run on the slot machine 1 is described based on FIG. 16. FIG. 16 is a flowchart related to the base game processing program. Base game processing is run in S13 of the main processing program in FIG. 13, however this first requires scrolling of the symbols on the variable display units 21 through 25 in S41 in FIG. 16, based on the switch signals output from the 1-LINE switch 62, the 2-LINES switch 63, the 5-LINES switch 64, the 20-LINES switch 65, and the 25-LINES switch 66 and received in S11 in FIG. 13.

Scrolling of the symbols scrolled on the variable display units 21 through 25 is stopped in S42.

In S43, credit equivalent to the payout determined based on the table in FIG. 11 is paid in accordance with the combination of winning combination symbols stopped and displayed on the variable display units 21 through 25 in S42. Following the processing in S43, processing returns to the main processing program shown in FIG. 13, and proceeds to the evaluation processing in S14.

The bonus game processing program run on the slot machine 1 is described based on FIG 17. FIG. 17 is a flowchart related to the bonus game processing program. In S14 of the main processing program shown in FIG. 13, when a win in a bonus game is determined (YES in S14), processing proceeds to S15 in FIG. 13 and bonus game processing is run, however this requires that lottery processing be run during the bonus game in S51 in FIG. 17. Here, in bonus games, symbols stopped and displayed on the primary activated pay-line are determined for each of the variable display units 21 through 25. In practice, as described above, five random numbers corresponding to the variable display units 21 through 25 are sampled with the random number sampling circuit 56, and the stopped and displayed symbols determined via the code numbers based on the secondary lottery table. When the symbols stopped and displayed in the relevant activated pay-lines are determined, the winning combination and payout for same is determined via these code numbers based on the table in FIG. 11.

In the rotation processing in S52, scrolling of the symbols on the variable display units 21 through 25 is automatic.

In the stop control processing in S53, scrolling of the symbols on the variable display units 21 through 25 is stopped automatically.

In the payout processing in S54, credit equivalent to the payout determined based on the table in FIG. 11 (however, the 'SHARK' symbol is handled as the `WILD' symbol (a letter)) is paid out in accordance with the combination of winning combination symbols stopped and displayed on the variable display units 21 through 25 in S53.

In S55, an evaluation is made to determine whether or not the number of times a bonus game is executed has reached the number determined in S12 in FIG 13. At this time, if the number of times a bonus game is executed has not reached the number determined in S12 in FIG. 13 (NO in S55), processing returns to S51 and the aforementioned processing is repeated. On the other hand, if the number of times a bonus game is executed has reached the number determined in S12 in FIG. 13 (YES in S55), the bonus game program is completed.

Even in S51, with a winning a bonus game, the number of repeats of the bonus game is newly determined, and this determined number of repeats is added to the 'number of times determined in S12 in FIG. 13' in the evaluation in S55. Thus, with a winning a bonus game during a bonus game, the bonus game can be continued even after the number of bonus games determined in S12 in FIG. 13 have been completed. For example, when first moving to twenty bonus games, with a winning seventeen bonus games in the twelfth bonus game, twenty five bonus games (20-12+17) are played.

Furthermore, when the final credit is acquired in a bonus game, a double-down game in which the relevant credit is bet is played following completion of the relevant bonus game, however a description of this point is omitted.

As described in detail above, the slot machine 1 of the first embodiment is provided with a cabinet 2, a lower LCD display 301 fitted to the cabinet 2, and a grip rail 302 provided on the lower LCD display 301, as shown in FIG. 6. By moving manually the lower LCD display 301 via the grip rail 302, a manual adjustment mechanism 311 shown in FIG. 1 through FIG 5 in which the installation angle of the lower LCD display 301 in relation to the cabinet 2 can be adjusted, is provided. In the manual adjustment mechanism 311, when the player grips the grip rail 302 provided on the lower LCD display 301 and pushes the grip rail 302 away from, or pulls the grip rail 302 towards the player, since the crests of the wave-shaped parts 322 formed on the bottom face of the frame 321 can simultaneously ride over the pair of primary rollers 331 and pair of secondary rollers 332, the lower LCD display 301 can be held while variously raised or lowered in a stepped manner, and the installation angle of the lower LCD display 301 in relation to the cabinet 2 can be changed, each time a crest rides over the pair of primary rollers 331 and pair of secondary rollers 332. Thus, since the installation angle of the lower LCD display 301 in relation to the cabinet 2 can be readily adjusted in a stepped manner, the player can adjust the installation angle to the desired angle (at which the displayed content is readily visible).

Furthermore, in the slot machine 1 of the first embodiment, when the player grips the grip rail 302 provided on the lower LCD display 301 and pushes the grip rail 302 away from, or pulls the grip rail 302 towards the player, when the installation angle of the lower LCD display 301 in relation to the cabinet 2 reaches the primary limit angle α1 shown in FIG. 4, or the secondary limit angle α2 shown in FIG. 5, the secondary limit switch 342 or the primary limit switch 341 detect the secondary limit angle or the primary limit angle and output the detect signal, the locking actuator 351 is actuated based on the CPU 50 receiving the detect signal (YES in S61) as shown in FIG 4 and FIG. 5, presses the locking plate 323 of the frame 321 with the rod 352 of the locking actuator 351, and fixes the installation angle of the lower LCD display 301 in relation to the cabinet 2 at the primary limit angle α1 or the secondary limit angle α2 (S62). Thus, the range of movement of the installation angle of the lower LCD display 301 in relation to the cabinet 2 is restricted to within the range between the primary limit angle α1 in FIG. 4 and the secondary limit angle α2 in FIG. 5.

In consideration of the fact that players operating the slot machine 1 of the first embodiment will be an indeterminate number of persons, and young persons, it is assumed that the slot machine 1 of the first embodiment will be used in a rough manner. Based on this assumption, it is also assumed that operation of the player gripping the grip rail 302 provided on the lower LCD display 301 and pushing the grip rail 302 away from, or pulling the grip rail 302 towards, the player, will be in a rough manner. When operated in this rough manner, the permitted range of operation is ignored, and operation is excessive, so that an excessive load is applied to the manual adjustment mechanism 311, and may result in damage to, or a malfunction in, the manual adjustment mechanism 311. However, in the slot machine 1, as described above, the range of movement of the installation angle of the lower LCD display 301 in relation to the cabinet 2 is physically restricted by the locking actuator 351, so that the range between the primary limit angle α1 shown in FIG. 4 and the secondary limit angle α2 shown in FIG. 5 is not exceeded. Application of an excessive load to the manual adjustment mechanism 311 is therefore prevented beforehand so that operation in a rough manner does not cause damage to, or a malfunction in, the manual adjustment mechanism 311.

Furthermore, in the slot machine 1 of the first embodiment, when the player continuously grips the grip rail 302 provided on the lower LCD display 301 and pushes the grip rail 302 away from, or pulls the grip rail 302 towards the player, when the installation angle of the lower LCD display 301 in relation to the cabinet 2 reaches the primary limit angle α1 shown in FIG 4, or the secondary limit angle α2 shown in FIG 5, the secondary limit switch 342 or the primary limit switch 341 detects the secondary limit angle or the primary limit angle and outputs the detect signal, the CPU 50 receives the detect signal (YES in S61) and displays the fact that the installation angle of the lower LCD display 301 in relation to the cabinet 2 has reached the primary limit angle α1, or the secondary limit angle α2, on the lower LCD display 301, and a sound is emitted from the speaker 80(S63), an error is displayed on the upper LCD display 3, processing is interrupted, and games cannot be played (S65).

Thus, the player can be persuaded not to grip the grip rail 302 provided on the lower LCD display 301 and push the grip rail 302 away from, or pull the grip rail 302 towards, the player.

Furthermore, in the slot machine 1 of the first embodiment, when the coin sensor 49 has detected a coin (YES in S24), and when the BET1 PER LINE button 33 and the like have been operated (YES in S25), the lock is cleared (S26). Only in this case the installation angle of the lower LCD display 301 in relation to the cabinet 2 can be changed by the player gripping the grip rail 302 provided on the lower LCD display 301 and pushing the grip rail 302 away from, or pulling the grip rail 302 towards, the player. Thus, a non-playing passerby is prevented from changing the installation angle of the lower LCD display 301 in relation to the cabinet 2 as a prank.

Furthermore, in the slot machine 1 of the first embodiment, when the predetermined time has elapsed after completion of the immediately previous slot game (base game or bonus game) (YES in S21), as shown in FIG. 1, the installation angle of the lower LCD display 301 in relation to the cabinet 2 is automatically restored to the default angle α0 (S22). Thus, when a game is not played on the slot machine 1 of the first embodiment, since the installation angle of the lower LCD display 301 in relation to the cabinet 2 is the predetermined angle α0 of the default angle, when a plurality of the slot machines 1 of the first embodiment are arrayed contiguously, the installation angle of the lower LCD display 301 in relation to the cabinet 2 is uniform for slot machines on which games are not currently played, and this is useful in improving appearance.

Furthermore, in the slot machine 1 of the first embodiment, when the predetermined time has elapsed after completion of the immediately previous slot game (base game or bonus game) (YES in S21), as shown in FIG 1, the installation angle of the lower LCD display 301 in relation to the cabinet 2 is automatically restored to the default angle α0 (S22), and furthermore, the demonstration image is then displayed on the upper LCD display 3 and the lower LCD display 301 (S23). At this time, the installation angle of the lower LCD display 301 on which demonstration image is displayed becomes the default angle α0, and the angle of view of the lower LCD display 301 is such that passersby can view the demonstration image on the lower LCD display 301 without restriction. For example, the default angle α0 is adjusted based on the horizontal distance between the lower LCD display 301 and the passerby, and the difference between the height of the center of the lower LCD display 301 and the eye height of the passerby. Change in the horizontal distance and the difference in height is naturally desirable according to the country or region in which the slot machine is installed, and ethnic group, gender, and age and the like of the anticipated passerby.

### [Second Embodiment]

In the games machine of the second embodiment of the present invention, the player can appropriately manipulate the installation angle of the display device in relation to the cabinet as desired. Furthermore, this manipulation is possible from the time the predetermined conditions are established until completion of play, and thus players and passersby can be prevented from adjusting and moving the display device simply as a prank unique to games machines.

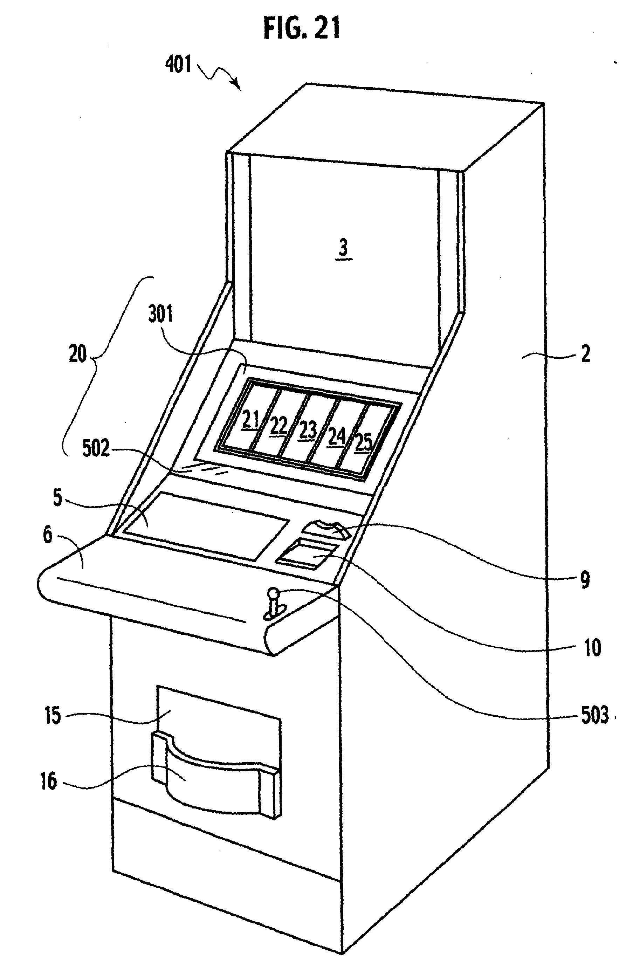

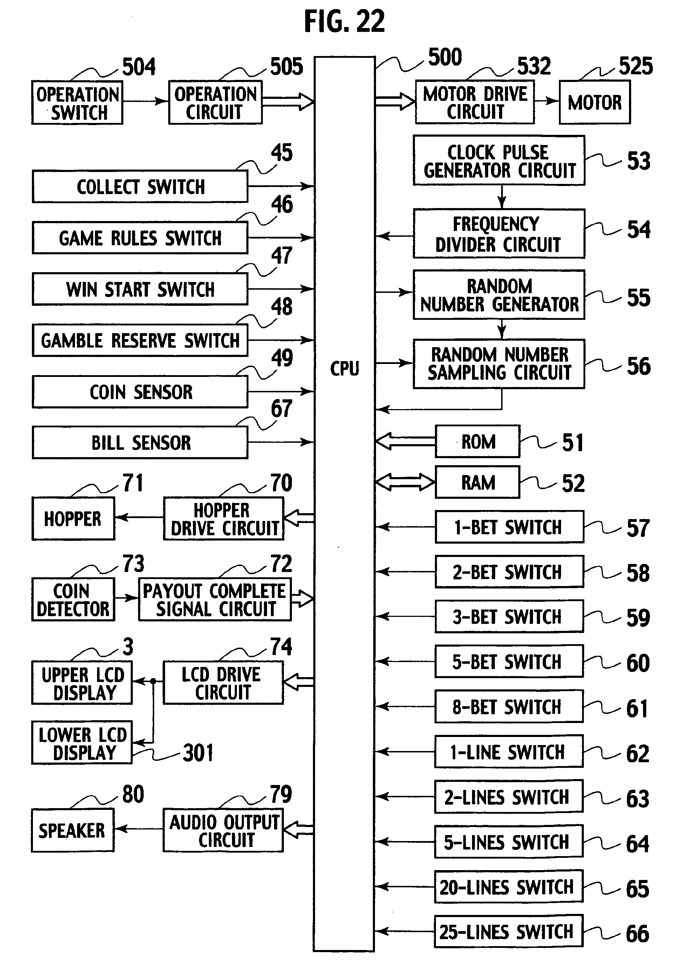

The games machine according to the second embodiment of the present invention is described below based on drawings for an embodiment of the present invention applied to a slot machine. Firstly, the configuration of the outline of the slot machine according to the second embodiment is described based on FIG. 7, FIG. 9, FIG. 10, FIG. 11, FIG. 12, FIG. 21, and FIG. 22. FIG. 7 is a front view of the operation table. FIG. 9 is a block diagram showing the LCD liquid crystal drive circuit in schematic format. FIG. 10 is a descriptive diagram showing schematically the columns of symbols variably displayed on the variable display units with base games. FIG. 11 is a descriptive diagram showing winning combination and payouts for same. FIG. 12 is a diagram showing the stop and display regions on the five variable display units. FIG. 21 is a perspective view of the slot machine. FIG. 22 is a schematic block diagram showing the control system of the slot machine.

In FIG. 21, the slot machine 401 has a slanted cabinet 2 forming the entirety of the slot machine 401 and at which a player can play while seated, an upper LCD display 3 provided at the top of the front face of the cabinet 2, and a lower LCD display 301 provided behind the protective panel 502 in the front panel 20 of the unit provided at the center of the front face of the cabinet 2. Here, the upper LCD display 3 is comprised of a general-purpose LCD display, and the lower LCD display 301 is also comprised of a general-purpose LCD display.

The upper LCD display 3 and the five variable display units 21, 22, 23, 24, and 25 shown on the lower LCD display 301 are similar to the first embodiment, and a description is therefore omitted.

The operation table 5, the various buttons provided on the operation table 5, and the coin insertion slot 9 and bill insertion slot 10 provided at the right side of the operation table 5 are similar to the first embodiment, and a description is therefore omitted.

As shown in FIG. 21, the control stick 503 is provided on the armrest 6. The operation switch 504 is fitted to the control stick 503, and an operation signal from the operation switch 504 based on operation of the control stick 503 is output to the CPU 500 via the operation circuit 505 (see FIG. 22).

The coin payout slot 15 and the coin receiver 16 are also similar to the first embodiment, and a description is therefore omitted.

The columns of symbols variably displayed while scrolling on the variable display units 21 through 25 are also similar to the first embodiment, and a description is therefore omitted.

Next, the configuration of the control system of the slot machine 401 is described based on FIG. 22. However, a description of points in common with the first embodiment is omitted.

As shown in FIG. 22, the operation switch 504 is connected to the CPU 500 via the operation circuit 505, and the motor 525 being a stepping motor is connected to the CPU 500 via the motor drive circuit 532. When the control stick 503 is operated (see FIG. 21), the operation signal emitted from the operation switch 504 is input to the CPU 500 via the operation circuit 505. The drive signal from the CPU 500 is then output to the motor drive circuit 532, and the motor drive circuit 532 receiving the drive signal outputs a stepping signal and the like to the motor 525. The motor 525 then rotates by the predetermined amount in the predetermined direction.

In the slot machine 401 of the second embodiment, the lower LCD display 301 is installed in the cabinet 2 as shown in FIG. 21. The installation angle of the lower LCD display 301 in relation to the cabinet 2 can be adjusted by operation of the control stick 503.

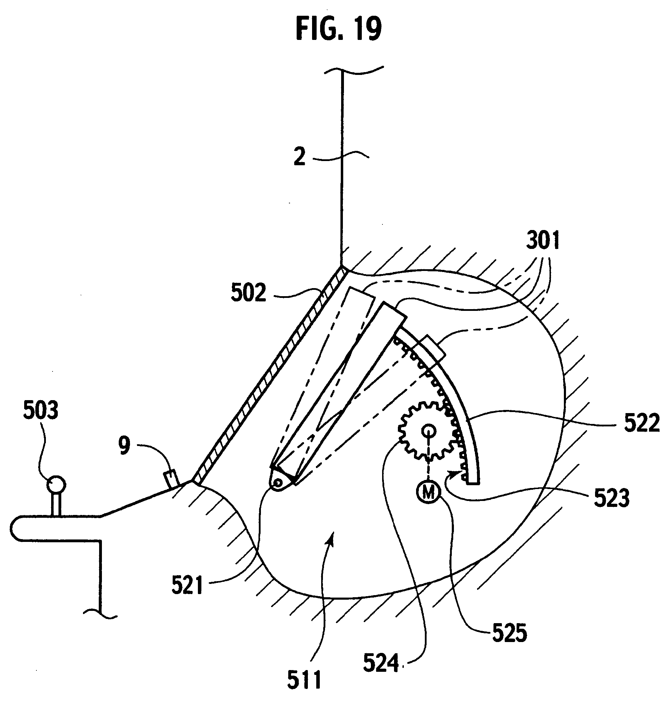

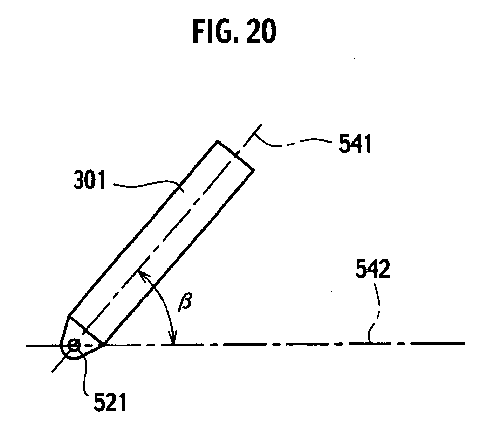

The installation angle adjustment mechanism is described based on FIG. 19 and FIG. 20. FIG. 19 is a side view showing the outline of the adjustment mechanism. FIG. 20 is a diagram showing an example of definition of the installation angle of the lower LCD display in relation to the cabinet.

As shown in FIG. 19, in the adjustment mechanism 511, the lower LCD display 301 is provided facing the protective panel 502 in the cabinet 2. The bottom of the lower LCD display 301 is rotatably supported on the axis in relation to the cabinet 2 via the rotation axis 521. On the other hand, the arc-shaped rack 522 projects from the top of the lower LCD display 301. The pinion 524 meshing with the teeth 523 of this arc-shaped rack 522 is rotatably supported on the axis in relation to the cabinet 2, and this rack 522 is rotated by the motor 525 being a stepping motor.

Here, for convenience in the description, as shown in FIG. 20, the angle β formed between the horizontal line 542 passing through the rotation axis 521, and the centerline 541 of the lower LCD display 301 is defined as the installation angle of the lower LCD display 301 in relation to the cabinet 2.

As referred to in the description of FIG. 21, when the control stick 503 is operated, the operation signal emitted from the operation switch 504 is input to the CPU 500 via the operation circuit 505, and furthermore, the motor drive circuit 532 outputs a stepping signal and the like to the motor 525 based on the motor drive circuit 532 receiving the drive signal from the CPU 500. Since the motor 525 receiving the stepping signal and the like rotates by the predetermined amount in the predetermined direction, the drive status of the motor 525 can be controlled. Since the drive force of the motor 525 under this control then rotates the lower LCD display 301 via the pinion 524 and the rack 522, the installation angle β of the lower LCD display 301 in relation to the cabinet 2 can be adjusted by operation of the control stick 503.

In practice, when the control stick 503 is continuously pushed towards the protective panel 502 (away from the player), the motor 525 rotates in one direction (clockwise in FIG. 19), and thus the lower LCD display 301 is gradually lowered. At this time, if the control stick 503 is returned to the raised position (the home position), rotation of the motor 525 is halted, and the installation angle β of the lower LCD display 301 in relation to the cabinet 2 is fixed.

On the other hand, when the control stick 503 is continuously pushed away from the protective panel 502 (towards the player), the motor 525 rotates in the reverse direction, and thus the lower LCD display 301 is gradually raised. At this time, operation returning the control stick 503 to the raised position (home position) results in halting of rotation of the motor 525, and the installation angle β of the lower LCD display 301 in relation to the cabinet 2 is fixed.

Since the position to which the motor 525 is rotated (angle of rotation) is controlled with the motor drive circuit 532, the CPU 500 can return the installation angle β of the lower LCD display 301 in relation to the cabinet 2 to the default angle by controlling the position to which the motor 525 is rotated. Furthermore, the range of rotation of the motor 525 is also controlled with the motor drive circuit 532, so that even when the control stick 503 is pushed down continuously, rotation of the motor 525 is halted immediately. Since an excessive load cannot be applied to the lower LCD display 301, the pinion 524, and the rack 522, the adjustment mechanism 511 is not damaged. That is to say, a range of adjustment exists when adjusting the installation angle β of the lower LCD display 301 in relation to the cabinet 2 by operation of the control stick 503, and this range of adjustment is controlled with the motor drive circuit 532.

The adjustment mechanism 511 is therefore provided with the lower LCD display 301 (monitor) freely rotating on the cabinet 2 (base) via the rotation axis 521 (hinge), and the rotatable motor 525 (drive source), within the cabinet 2 (game cabinet). The electrically operated control stick 503 (switch) able to freely rotate the lower LCD display 301 using the motor 525 (drive source), and electrically connected to the motor 525 (drive source), is provided on the front face of the cabinet 2 (game cabinet).

The main processing, the lottery processing, the base game processing, and the bonus game processing run on the slot machine 401 is similar to the first embodiment, and a description is therefore omitted.

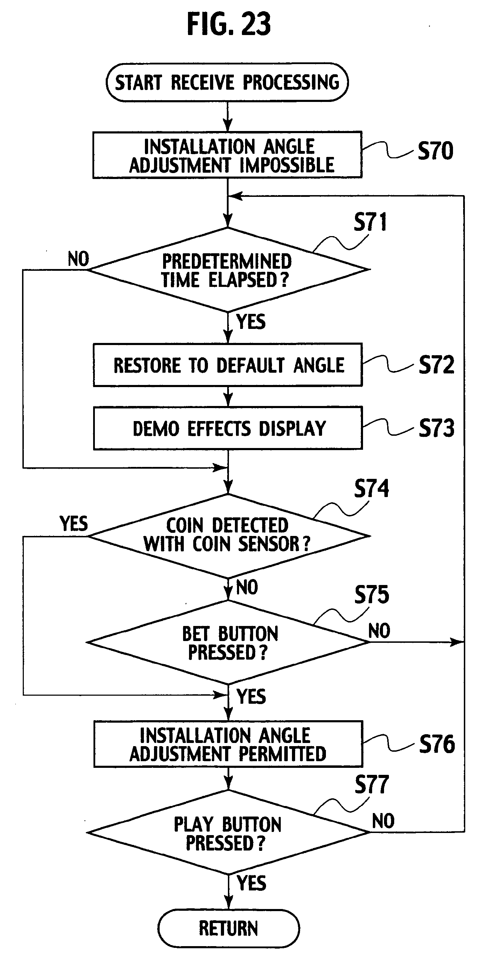

The start receive processing run on the slot machine 401 is described based on FIG. 23. FIG. 23 is a flowchart related to the start receive processing program. In S11 of the main processing program shown in FIG. 13, when running the start receive processing, processing for making it impossible to adjust the installation angle is first run in S70 in FIG. 23. When this processing is run, the CPU 500 ignores the operation signal received from the operation switch 504 via the operation circuit 505, and either does not output the drive signal, or outputs a drive signal not driving the motor 525, to the motor drive circuit 532. In this state, since the motor 525 does not rotate even when the control stick 503 is operated, the lower LCD display 301 cannot be moved, and the installation angle β of the lower LCD display 301 in relation to the cabinet 2 can no longer be adjusted.

In S71, an evaluation is made to determine whether or not the predetermined time (for example, 15 seconds) has elapsed after completion of the slot game (base game or bonus game). Here, if the predetermined time has not elapsed (NO in S71), processing proceeds immediately to S74 without further action, however if the predetermined time has elapsed (YES in S71), the default angle is restored in S72. That is to say, the CPU 500 computes the amount and direction of rotation of the motor 525, and outputs a drive signal to the motor drive circuit 532 to move the motor 525 by the computed amount and in the computed direction so that the installation angle β of the lower LCD display 301 in relation to the cabinet 2 becomes the default angle. The demo effects are then displayed on the upper LCD display 3 and lower LCD display 301 in S73, and the demonstration image is displayed.

In S74, an evaluation is made to determine whether or not the coin sensor 49 has detected a coin. This evaluation is conducted by evaluating whether or not the coin detect signal has been received from the coin sensor 49. If the coin sensor 49 has detected a coin (YES in S74), no action is taken and processing proceeds to S76. When the coin sensor 49 has not detected a coin (NO in S74), processing proceeds to S75.

In S75, an evaluation is made to determine whether or not the BET1 PER LINE button 33, the BET2 PER LINE button 34, the BET3 PER LINE button 35, the BET5 PER LINE button 36, or the BET8 PER LINE button 37 has been operated. Here, when the BET1 PER LINE button 33 and the like has not been operated (NO in S75), processing returns to S71 and the aforementioned processing is repeated, however on the other hand, if the BET1 PER LINE button 33 and the like have been operated (YES in S75), processing proceeds to S76.

Installation angle adjustment permit processing is run in S76. In this processing, the CPU 500 receives the operation signal from the operation switch 504 via the operation circuit 505, and furthermore, computes the amount and direction of rotation of the motor 525 for the motor drive circuit 532 based on the operation signal from the operation switch 504, and outputs a drive signal to the motor drive circuit 532 to move the motor 525 by the computed amount and in the computed direction. When the control stick 503 is operated in this condition, since the motor 525 rotates, the lower LCD display 301 can be moved, and the installation angle β of the lower LCD display 301 in relation to the cabinet 2 can be adjusted.

In S77, an evaluation is made to determine whether or not the RED PLAY1 LINE button 39, the PLAY2 LINES button 40, the PLAY5 LINES button 41, the PLAY20 LINES button 42, or the BLACK PLAY25 LINES button 43 has been operated. When the RED PLAY1 LINE button 39 and the like have not been operated (NO in S77), processing returns to S71, and the aforementioned processing is repeated. On the other hand, when the RED PLAY1 LINE button 39 and the like have been operated (YES in S77), processing returns to the main processing program in FIG. 13 even if currently displaying demo effects, and proceeds to lottery processing in S12.

In the evaluation processing in S77, evaluation can be not only with these operation signals, but also with other input.

The CPU 500 therefore acts as 'permitting means' when executing S76.

Furthermore, the 'predetermined conditions' are established when the CPU 500 determines YES in S74 and S75.

Furthermore, the CPU 500 acts as 'automatic restoration means' when executing S72.

As described in detail above, the slot machine 401 of the second embodiment is provided with a cabinet 2, a lower LCD display 301 installed in the cabinet 2, an adjustment mechanism 511 in which the installation angle β (see FIG. 20) of the lower LCD display 301 in relation to the cabinet 2 can be adjusted using the motor 525, and a control stick 503 operating the adjustment mechanism 511, as shown in FIG 19. In the adjustment mechanism 511, when the control stick 503 is lowered, the motor 525 is rotated, and thus the lower LCD display 301 is gradually lowered or raised, and when the control stick 503 is returned to the raised condition (home position), motor 525 rotation is halted, and the installation angle β of the lower LCD display 301 in relation to the cabinet 2 is fixed.

Operation of the adjustment mechanism 511 with such a control stick 503 is permitted by the CPU 500 (S76) only when the coin sensor 49 has detected a coin (YES in S74), or when the BET1 PER LINE button 33 and the like have been operated (YES in S75). Operation is not permitted by CPU 500 in other cases (S70).

That is to say, in the slot machine 401 of the second embodiment, the player can manipulate the installation angle β (see FIG. 20) of the lower LCD display 301 in relation to the cabinet 2 appropriately as desired via operation of the adjustment mechanism 511 with the control stick 503. This operation is permitted by the CPU 500 (S76) only when the coin sensor 49 has detected a coin (YES in S74), or when the BET1 PER LINE button 33 and the like have been operated (YES in S75). Operation is not permitted by CPU 500 when a game is not played on the slot machine (S70). Thus, there is the advantage that players and passersby can be prevented from adjusting and moving the lower LCD display 301 simply as a prank unique to the slot machine 401.

Furthermore, in the slot machine 401 of the second embodiment, when the predetermined time has elapsed (YES in S71) after completion of the slot game (base game or bonus game), the installation angle β of the lower LCD display 301 in relation to the cabinet 2 is automatically restored to the default angle (S72). Thus, in the slot machine 401 of the second embodiment, the installation angle β of the lower LCD display 301 in relation to the cabinet 2 becomes the default angle when a game is not played on the slot machine. Thus, when a plurality of the slot machines 401 of the second embodiment are arrayed contiguously, the installation angle of the lower LCD display 301 in relation to the cabinet 2 is uniform for slot machines on which games are not currently played, and this is useful in improving appearance.

Furthermore, in the slot machine 401 of the second embodiment, as described above, when the predetermined time has elapsed (YES in S71) after completion of the slot game (base game or bonus game), the installation angle β of the lower LCD display 301 in relation to the cabinet 2 is automatically restored to the default angle (S72). The demo effects are then displayed on the upper LCD display 3 and lower LCD display 301, and the demonstration image is displayed (S73). At this time, the installation angle β of the lower LCD display 301 on which the demonstration image is displayed in relation to the cabinet 2 becomes the default angle, and the angle of view of the lower LCD display 301 is such that the demonstration image on the lower LCD display 301 can be viewed by passersby without restriction. As described above, the default angle is adjusted based on the horizontal distance between the lower LCD display 301 and an assumed passerby, and the difference between the height of the center of the lower LCD display 301 and the eye height of the assumed passerby.

### [Third Embodiment]

In the games machine of the third embodiment of the present invention, the installation angle of the display device in relation to the cabinet is adjusted automatically according to the position of the head of the player, and since adjustment by operation by players and passersby is not possible, players and passersby can be prevented from adjusting and moving the display device simply as a prank unique to the games machine. Furthermore, by permitting automatic adjustment only from the time the predetermined conditions are established until completion of play, a malfunction such as automatic adjustment according to the position of the head of a passerby is prevented.

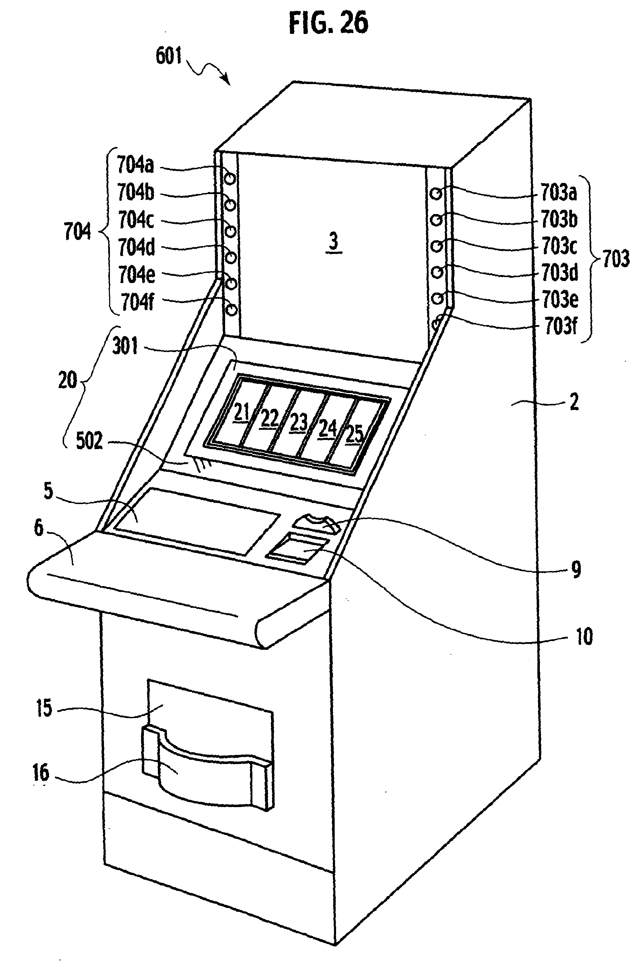

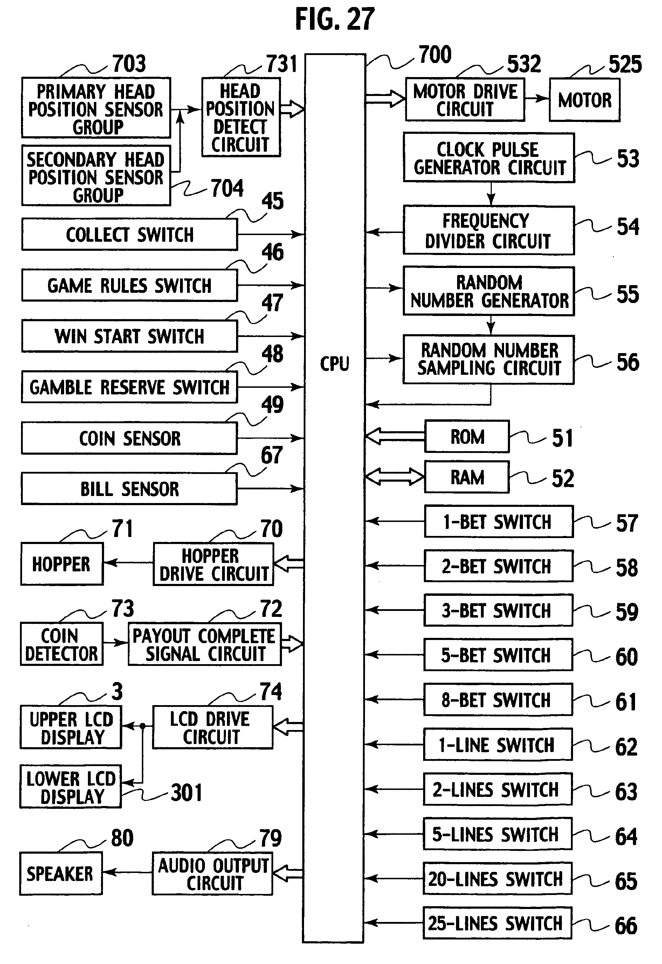

The games machine according to the third embodiment of the present invention is described below in reference to drawings based on an embodiment of the present invention applied to a slot machine. Firstly, the configuration of the outline of the slot machine according to the third embodiment is described based on FIG. 7, FIG. 9, FIG. 10, FIG. 11, FIG. 12, FIG. 26, and FIG. 27. FIG. 7 is a front view of the operation table. FIG. 9 is a block diagram showing the LCD liquid crystal drive circuit in schematic format. FIG. 10 is a descriptive diagram showing schematically the columns of symbols variably displayed on the variable display units with base games. FIG. 11 is a descriptive diagram showing winning combination and payouts for same. FIG. 12 is a diagram showing the stop and display regions on the five variable display units. FIG. 26 is a perspective view of the slot machine. FIG 27 is a schematic block diagram showing the control system of the slot machine.

In FIG. 26, the slot machine 601 has a slanted cabinet 2 forming the entirety of the slot machine 601 and at which a player can play while seated, an upper LCD display 3 provided at the top of the front face of the cabinet 2, and a lower LCD display 301 provided behind the protective panel 502 in the front panel 20 of the unit provided at the center of the front face of the cabinet 2. Here, the upper LCD display 3 is comprised of a general-purpose LCD display, and the lower LCD display 301 is also comprised of a general-purpose LCD display. The upper LCD display 3, the lower LCD display 301 and the five variable display units 21, 22, 23, 24, and 25 displayed on the lower LCD display 301 are similar to the first embodiment, and a description is therefore omitted.

The operation table 5, the various buttons provided on the operation table 5, and the coin insertion slot 9 and bill insertion slot 10 provided at the right side of the operation table 5 are similar to the first embodiment, and a description is therefore omitted.

As shown in FIG. 26, the primary head position sensor group 703 and the secondary head position sensor group 704 are provided on both sides of the upper LCD display 3. The primary head position sensor group 703 is comprised of the first sensor 703a, the second sensor 703b, the third sensor 703c, the fourth sensor 703d, the fifth sensor 703e, and the sixth sensor 703f. These six sensors are arrayed equidistantly. Furthermore, the second head position sensor group 704 is comprised of the first sensor 704a, the second sensor 704b, the third sensor 704c, the fourth sensor 704d, the fifth sensor 704e, and the sixth sensor 704f. These six sensors are arrayed equidistantly.

When the position of the head of the player who is seated in front of a slanted cabinet 2 is detected by the six sensors 703a through 703f comprising the primary head position sensor group 703, and the six sensors 704a through 704f comprising the secondary head position sensor group 704, a detect signal is processed by the head position detect circuit 731 and output to the CPU 700 (see FIG. 27).

The columns of symbols variably displayed while scrolling on the variable display units 21 through 25 are similar to the first embodiment, and a description is therefore omitted. Furthermore, the coin payout slot 15 and the coin receiver 16 are similar to the first embodiment, and a description is therefore omitted.

Next, the configuration of the control system of the slot machine 601 is described based on FIG 27. However, a description of points in common with the first embodiment is omitted.

As shown in FIG. 27, the primary head position sensor group 703 and the secondary head position sensor group 704 are connected to the CPU 700 via the head position detect circuit 731, and furthermore, the motor 525 being a stepping motor is connected to the CPU 700 via the motor drive circuit 532. When the detect signals are input to the CPU 700 from the six sensors 703a through 703f comprising the primary head position sensor group 703, or the six sensors 704a through 704f comprising the secondary head position sensor group 704, via the head position detect circuit 731, the drive signal is output to the motor drive circuit 532 from the CPU 700, and since the motor drive circuit 532 receiving the drive signal output a stepping signal and the like to the motor 525, the 525 rotates in the predetermined direction by the predetermined amount.
In the slot machine 601 of the third embodiment, as shown in FIG. 26, the lower LCD display 301 is installed in the cabinet 2. When the position of the head of the player is detected with the six sensors 703a through 703f comprising the primary head position sensor group 703, or the six sensors 704a through 704f comprising the secondary head position sensor group 704, the installation angle of the lower LCD display 301 in relation to the cabinet 2 is automatically adjusted so that the player is able to readily view the lower LCD display 301 in consideration of the detected position of the head of the player.

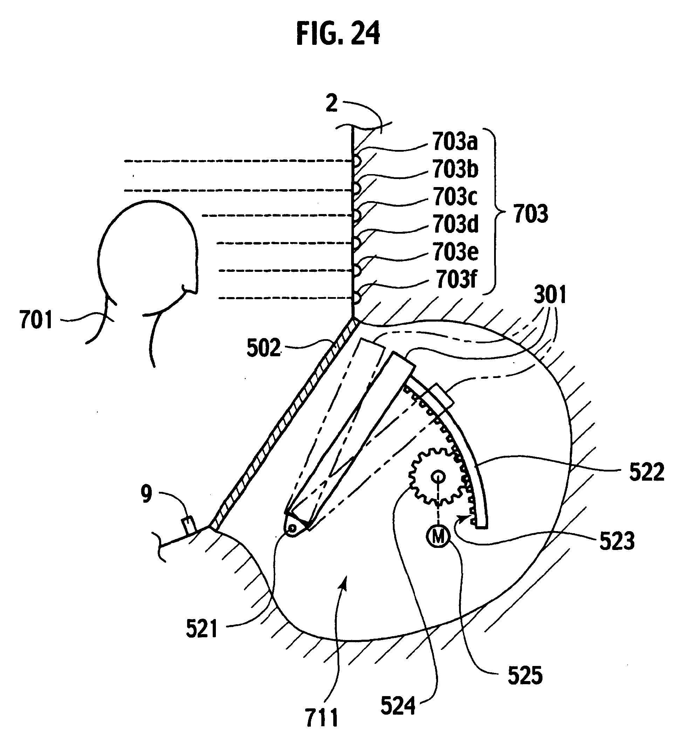

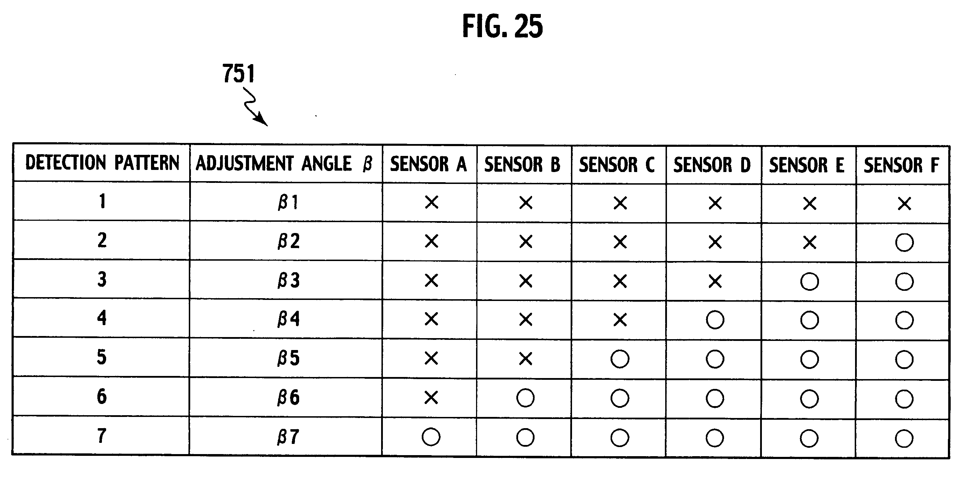

The automatic adjustment mechanism provided in the slot machine 601 of the third embodiment is described based on FIG. 20, FIG. 24, and FIG. 25. FIG. 20 is a diagram showing an example of definition of the installation angle of the lower LCD display in relation to the cabinet. FIG 24 is a side view showing the outline of the automatic adjustment mechanism. FIG. 25 is a diagram showing the control table.

As shown in FIG. 24, in the automatic adjustment mechanism 711, the lower LCD display 301 is provided facing the protective panel 502. The bottom of the lower LCD display 301 is rotatably supported on the axis in relation to the cabinet 2 via the rotation axis 521. On the other hand, the arc-shaped rack 522 projects from the top of the lower LCD display 301. The pinion 524 meshing with the teeth 523 of this rack 522 are rotatably supported on the axis in relation to the cabinet 2, and this rack 522 is rotated by the motor 525 being a stepping motor.

Similarly to the second embodiment, as shown in FIG. 20, the angle β formed between the horizontal line 542 passing through the rotation axis 521, and the centerline 541 of the lower LCD display 301 is defined as the installation angle of the lower LCD display 301 in relation to the cabinet 2.

The position of the head of the player 701 is detected with the six sensors 703a through 703f comprising the primary head position sensor group 703, or the six sensors 704a through 704f comprising the secondary head position sensor group 704. As shown in the control table 751 in FIG 25, seven detection patterns are used with the primary head position sensor group 703 and the secondary head position sensor group 704.

For convenience in the description, only the primary head position sensor group 703 is described. In the control table 751 in FIG 25, 'sensor a' is the first sensor 703a, 'sensor b' is the second sensor 703b, 'sensor c' is the third sensor 703c, 'sensor d' is the fourth sensor 703d, 'sensor e' is the fifth sensor 703e, and 'sensor f' is the sixth sensor 703f. 'O' indicates that a sensor has detected the head, and 'X' indicates that a sensor has not detected the head.

Since none of the six sensors 703a through 703f detect the player 701 in detection pattern 1, the position of the head of the player 701 is assumed to be below the position of the sixth sensor 703f (see FIG. 24), and the installation angle β of the lower LCD display 301 in relation to the cabinet 2 is automatically adjusted to 'β1' at which the lower LCD display 301 is presumed to be readily viewable from this assumed position.

Since the sensor 703f detects the player 701, and the five sensors 703a through 703e do not detect the player 701, in detection pattern 2, the position of the head of the player 701 is assumed to be between the positions of the fifth sensor 703e and the sixth sensor 703f (see FIG. 24), and the installation angle β of the lower LCD display 301 in relation to the cabinet 2 is automatically adjusted to 'β2' at which the lower LCD display 301 is presumed to be readily viewable from this assumed position.

Since the two sensors 703e and 703f detect the player 701 , and the four sensors 703a through 703d do not detect the player 701, in detection pattern 3, the position of the head of the player 701 is assumed to be between the positions of the fourth sensor 703d and the fifth sensor 703e (see FIG. 24), and the installation angle β of the lower LCD display 301 in relation to the cabinet 2 is automatically adjusted to 'β3' at which the lower LCD display 301 is presumed to be readily viewable from this assumed position.

Since the three sensors 703d through 703f detect the player 701, and the three sensors 703a through 703c do not detect the player 701, in detection pattern 4, the position of the head of the player 701 is assumed to be between the positions of the third sensor 703c and the fourth sensor 703d (see FIG. 24), and the installation angle β of the lower LCD display 301 in relation to the cabinet 2 is automatically adjusted to 'β4' at which the lower LCD display 301 is presumed to be readily viewable from this assumed position.

Since the four sensors 703c through 703f detect the player 701, and the two sensors 703a and 703b do not detect the player 701, in detection pattern 5, the position of the head of the player 701 is assumed to be between the positions of the second sensor 703b and the third sensor 703c (see FIG 24), and the installation angle β of the lower LCD display 301 in relation to the cabinet 2 is automatically adjusted to 'β5' at which the lower LCD display 301 is presumed to be readily viewable from this assumed position.

Since the five sensors 703b through 703f detect the player 701 , and the sensor 703a does not detect the player 701, in detection pattern 6, the position of the head of the player 701 is assumed to be between the positions of the first sensor 703a and second sensor 703b (see FIG. 24), and the installation angle β of the lower LCD display 301 in relation to the cabinet 2 is automatically adjusted to 'β6' at which the lower LCD display 301 is presumed to be readily viewable from this assumed position.

Since the six sensors 703a through 703f all detect the player 701, in detection pattern 6, the position of the head of the player 701 is assumed to be above the position of the first sensor 703a (see FIG. 24), and the installation angle β of the lower LCD display 301 in relation to the cabinet 2 is automatically adjusted to 'β7' at which the lower LCD display 301 is presumed to be readily viewable from this assumed position.

The relationship between the control table 751 in FIG 25 and the secondary head position sensor group 704 is similar. However, when adjusting the installation angle β of the lower LCD display 301 in relation to the cabinet 2, the detection result from the primary head position sensor group 703 is used first, and the detection result from the secondary head position sensor group 704 is used only when the detection result from the primary head position sensor group 703 is none of the seven detection patterns.

Furthermore, when the detection result from the primary head position sensor group 703 and the detection result from the secondary head position sensor group 704 are none of the seven detection patterns, the installation angle is automatically adjusted to the preset default angle, or the position of the sensor detecting at the lowest point is assumed as the position of the head of the player 701, and the adjustment angle may be stored beforehand in the table according to the assumed position and automatically adjusted based on this table.

When making these adjustments, the detection signals from the six sensors 703a through 703f comprising the primary head position sensor group 703, and the six sensors 704a through 704f comprising the secondary head position sensor group 704, are analyzed and output to the CPU 700 as the detection results from the primary head position sensor group 703 and the secondary head position sensor group 704. When the CPU 700 receives the detection results, the installation angle β of the lower LCD display 301 in relation to the cabinet 2 is specified based on the control table 751 and the like in FIG. 25, and output to the motor drive circuit 532 as the drive signal. When the motor drive circuit 532 receives the drive signal, the direction and amount of rotation of the motor 525 is computed, and a stepping signal for the computed direction and amount of rotation is output to the motor 525 in order to achieve the specified installation angle β of the lower LCD display 301 in relation to the cabinet 2. Thus, the motor 525 rotates in the specified direction and by the specified amount, the drive force becomes the rotation source of the lower LCD display 301 via the pinion 524 and rack 522, and the installation angle β of the lower LCD display 301 in relation to the cabinet 2 is automatically adjusted to the specified angle.

Since the motor drive circuit 532 controls the angle of rotation of the motor 525, the CPU 700 can also restore the installation angle β of the lower LCD display 301 in relation to the cabinet 2 by controlling the rotation position of the motor 525. Furthermore, the motor drive circuit 532 also controls the range of rotation of the motor 525, and since excessive load does not act on the lower LCD display 301, the pinion 524, and the rack 522, the automatic adjustment mechanism 711 is not damaged. That is to say, the installation angle β of the lower LCD display 301 in relation to the cabinet 2 has a range of possible change, and the motor drive circuit 532 controls this range of possible change.

The adjustment mechanism 711 is therefore provided with the lower LCD display 301 (monitor) freely rotating on the cabinet 2 (base) via the rotation axis 521 (hinge), and the rotatable motor 525 (drive source), within the cabinet 2 (game cabinet). The primary head position sensor group 703 and the secondary head position sensor group 704 (sensors) recognizing the position of the head of the player are provided on the front face of the cabinet 2 (game cabinet) and the angle of the lower LCD display 301 (monitor) is changed automatically based on the recognition result of the primary head position sensor group 703 and the secondary head position sensor group 704 (sensors) while referencing the control table 751 (head position/angle setting table).

The main processing, lottery processing, base game processing, and bonus game processing run on the slot machine 601 is similar to the first embodiment, and a description is therefore omitted.

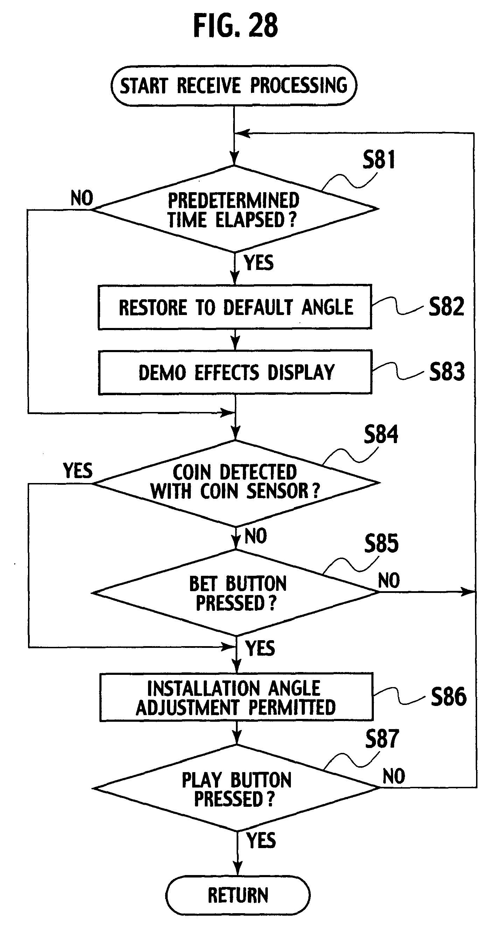

The start receive processing program run on the slot machine 601 is described based on FIG. 28. FIG. 28 is a flowchart related to the start receive processing program. In S11 of the main processing program shown in FIG. 13, when start receive processing is run, an evaluation is first made in S81 in FIG. 28 of whether or not the predetermined time (for example, 15 seconds) has elapsed after completion of the slot game (base game or bonus game). Here, if the predetermined time has not elapsed (NO in S81), processing proceeds immediately to S24 without further action, and if the predetermined time has elapsed (YES in S81), the default angle is restored in S22. That is to say, the CPU 700 computes the amount and direction of rotation of the motor 525, and outputs a drive signal to the motor drive circuit 532 to move the motor 525 by the computed amount and in the computed direction so that the installation angle β of the lower LCD display 301 in relation to the cabinet 2 becomes the default angle. The demo effects are then displayed on the upper LCD display 3 and lower LCD display 301 in S83, and the demonstration image is displayed.

In S84, an evaluation is made to determine whether or not the coin sensor 49 has detected a coin. This evaluation is conducted by evaluating whether or not the coin detect signal has been received from the coin sensor 49. When the coin sensor 49 has detected a coin (YES in S84), no action is taken and processing proceeds to S86. When the coin sensor 49 has not detected a coin (NO in S84), processing proceeds to S85.

In S85, an evaluation is made to determine whether or not the BET1 PER LINE button 33, the BET2 PER LINE button 34, the BET3 PER LINE button 35, the BET5 PER LINE button 36, or the BET8 PER LINE button 37 has been operated. When the BET1 PER LINE button 33 and the like have not been operated (NO in S85), processing returns to S81, and the aforementioned processing is repeated. On the other hand, if the BET1 PER LINE button 33 and the like have been operated (YES in S85), processing proceeds to S86.

Installation angle adjustment processing is run in S86. In this processing, the installation angle β of the lower LCD display 301 in relation to the cabinet 2 is specified based on the control table 751 in FIG. 25 when the detection result is received from the head position detect circuit 731, and then output to the motor drive circuit 532 as the drive signal. When the motor drive circuit 532 receives the drive signal, the direction and amount of rotation of the motor 525 is computed, and a stepping signal for the computed direction and amount of rotation is output to the motor drive circuit 532 in order to achieve the specified installation angle β of the lower LCD display 301 in relation to the cabinet 2. Thus, the motor 525 rotates in the specified direction and by the specified amount, the drive force becomes the rotation source of the lower LCD display 301 via the pinion 524 and rack 522, and the installation angle β of the lower LCD display 301 in relation to the cabinet 2 is automatically adjusted to the specified angle.

In S87, an evaluation is made to determine whether or not the RED PLAY1 LINE button 39, the PLAY2 LINES button 40, the PLAY5 LINES button 41, the PLAY20 LINES button 42, or the BLACK PLAY25 LINES button 43 has been operated. Here, when the RED PLAY1 LINE button 39 and the like have not been operated (NO in S87), processing returns to S81, and the aforementioned processing is repeated. On the other hand, when the RED PLAY1 LINE button 39 and the like have been operated (YES in S87), processing returns to the main processing program in FIG. 13 even if currently displaying the demo effects, and proceeds to lottery processing in S12.

In the evaluation processing in S87, evaluation can be not only with the operation signals, but also with other signals.

The CPU 700 therefore acts as permitting means' when executing S86.

Furthermore, the 'predetermined conditions' are established when the CPU 700 determines YES in S84 and S85.

Furthermore, the CPU 700 acts as 'automatic restoration means' when executing S82.

As described in detail above, and as shown in Fig.24, the slot machine 601 of the third embodiment is provided with a cabinet 2, a lower LCD display 301 installed in the cabinet 2, and the automatic adjustment mechanism 711 able to adjust the installation angle β of the lower LCD display 301 in relation to the cabinet 2 using the motor 525 (see FIG. 20). In the automatic adjustment mechanism 711, the position of the head of the player 701 is recognized with the primary head position sensor group 703 and the secondary head position sensor group 704, and the installation angle β of the lower LCD display 301 in relation to the cabinet 2 is automatically adjusted based on the recognition results of the primary head position sensor group 703 and the secondary head position sensor group 704, and the control table 751 in FIG. 25.

Automatic adjustment with such an automatic adjustment mechanism 711 is permitted by the CPU 700 (S86) only when the coin sensor 49 has detected a coin (YES in S84), or when the BET1 PER LINE button 33 and the like have been operated (YES in S85). CPU 700 does not permit operation in other cases (S80).

That is to say, in the slot machine 601 of the third embodiment, the installation angle β of the lower LCD display 301 in relation to the cabinet 2 is automatically adjusted in accordance with the position of the head of the player 701 (S86), and cannot be adjusted by manipulation by the player 701 and passersby. Thus, there is the advantage that player 701 and passersby can be prevented from adjusting and moving the lower LCD display 301 simply as a prank unique to the slot machine 601. Furthermore, there is the advantage that the CPU 700 permits automatic adjustment (S86), and prevents a malfunction such as automatic adjustment in accordance with the position of the head of a passerby, only when the coin sensor 49 has detected a coin (YES in S84), and when the BET1 PER LINE button 33 and the like have been operated (YES in S85).

Furthermore, in the slot machine 601 of the third embodiment, when the predetermined time has elapsed (YES in S81) after completion of the slot game (base game or bonus game), the installation angle β of the lower LCD display 301 in relation to the cabinet 2 is automatically restored to the default angle (S82). Thus, in the slot machine 601 of the third embodiment, the installation angle β of the lower LCD display 301 in relation to the cabinet 2 becomes the default angle when a game is not played on the slot machine. Thus, when a plurality of the slot machines 601 of the third embodiment are arrayed contiguously, the installation angle of the lower LCD display 301 in relation to the cabinet 2 is uniform for slot machines on which games are not currently played, and this is useful in improving appearance.

Furthermore, in the slot machine 601 of the third embodiment, as described above, when the predetermined time has elapsed (YES in S81) after completion of the slot game (base game or bonus game), the installation angle β of the lower LCD display 301 in relation to the cabinet 2 is automatically restored to the default angle (S82), the demo effects are then displayed on the upper LCD display 3 and lower LCD display 301, and the demonstration image is displayed (S83). At this time, the installation angle β of the lower LCD display 301 on which the demonstration image is displayed in relation to the cabinet 2 becomes the default angle, and the angle of view of the lower LCD display 301 is such that passersby can view the demonstration image on the lower LCD display 301 without restriction. As described above, the default angle is adjusted based on the horizontal distance between the lower LCD display 301 and an assumed passerby, and the difference between the height of the center of the lower LCD display 301 and the eye height of the assumed passerby.

Monitors are an essential component of modern video game machines, and moving the monitor during the game results in a problem in that viewing the demonstration image displayed on the monitor while a game is not currently played becomes difficult, a problem in that the angles of the monitors of a plurality of arrayed video game machines differ, thus negatively affecting appearance, and furthermore, when an LCD display is adopted as the monitor, there may be a difference in visibility with angle of view, resulting in a problem in that appearance deteriorates. In the slot machine 601 of the third embodiment, all of these problems are resolved.

The present invention is not limited to the aforementioned embodiments, and may be variously modified within the spirit thereof.

For example, the slot machine of the first through third embodiments is the slanted type at which a player can play while seated, however an upright type at which a player can play while standing is also possible.

Furthermore, games having five-reel video slots are played on the slot machine of the first through third embodiments, however games having, for example, three-reel and nine-reel video slots can also be played. Furthermore, slot machines can also use, for example, three-reel, five-reel, or nine-reel mechanical reels. Furthermore, a hybrid slot machine can also use video reels and mechanical reels in combination.

Furthermore, the present invention is implemented in the slot machine of the first through third embodiments on which slot games are played, however the present invention may also be implemented in game machines on which other types of games, for example, card games and shooting games, are played. Furthermore, for example, this present invention may be implemented for changing the installation angle of TVs provided in aircraft and the like.

The entire content of Japanese Patent Application Nos. 2005-011250, 2005-011251 and 2005-011252, filed on January 19, 2005 in the Japanese Patent Office are herein incorporated by reference.

Also, while the present invention has been described above in detail, it is apparent to those skilled in the art that the present invention is not limited to the embodiment described in the present invention. The device of the present invention can be embodied in modified or alternative forms without departing from the spirits and scopes of the present invention as set out in the appended claims. Accordingly, the description of the present invention is meant to be illustrative only and not limiting to the scope of the present invention.

## Claims

1. A games machine comprising:
a cabinet (2);
a display means (301) installed in the cabinet;
a grip rail provided on the display means; and
a manual adjustment mechanism (311) for adjusting an angle of installation of the display means in relation to the cabinet by moving manually the display means via the grip rail.

2. The games machine according to Claim 1 further comprising:
a restriction means (351) restricting the range of movement of the display device.

3. The games machine according to Claim 2 further comprising:
a position detection means (341) detecting a position of the display device; and
a notification means (3) externally notifying that position detection means have detected the display device reaching a limit of movement.

4. The games machine according to Claim 2 further comprising:
a position detection means (341) detecting a position of the display device; and
a play control means (50) establishing a condition wherein play is impossible when position detection means have detected the display device reaching a limit of movement.

5. The games machine according to one of Claim 1 through Claim 4 further comprising:
a game medium detection means (49) detecting game medium supplied as remuneration for play;
an interruption means (50) interrupting movement of the display device; and
a clearing means (50) clearing interruption of movement of the display device with the interruption means when the game medium detection means detects the game medium.

6. The games machine according to one of Claim 1 through Claim 4 further comprising:
a bet setting means (57) setting the number of game medium as remuneration for play;
an interruption means (50) interrupting movement of the display device; and
a clearing means (50) clearing interruption of movement in relation to the display device with the interruption means on condition of manipulation of the bet setting means.

7. The games machine according to one of Claim 1 through Claim 6 further comprising:
an image control means (3) displaying demonstration images on the display device from the time of completion of play until a time of commencement of play.

8. The games machine according to one of Claim 1 through Claim 7 further comprising:
an automatic restoration means (50) automatically restoring the installation angle of the display device to a default angle at the time of completion of play.

9. A games machine comprising:
a cabinet (2);
a display means (301) installed in the cabinet;
an adjustment mechanism (511) for adjusting an angle of installation of the display means in relation to the cabinet using a drive source;
a manipulation means (503) for manipulating the adjustment mechanism; and
a permitting means (500) for permitting manipulation of the adjustment mechanism with the manipulation means from a time when a predetermined condition is fulfilled until completion of play.

10. The games machine according to Claim 9 further comprising:
a game medium detection means (49) detecting game medium supplied as remuneration for play; and wherein
a detection by the game medium detection means is the predetermined condition.

11. The games machine according to Claim 9 further comprising:
a bet setting means (57) set as remuneration for play with the predetermined number of game medium; and wherein
a manipulation of the bet setting means is the predetermined condition.

12. The games machine according to one of Claim 9 through Claim 11 further comprising:
an image control means (500) displaying demonstration images on the display device from a time of completion of play until a time of commencement of play; and
an automatic restoration means (500) automatically restoring the installation angle of the display device to a default angle with the adjustment mechanism at the time of completion of play.

13. A games machine further comprising:
a cabinet (2);
a display means (301) installed in the cabinet;
an automatic adjustment mechanism (711) for automatically adjusting an angle of installation of the display means in relation to the cabinet;
a head position detection means (703) detecting a position of a head of a player playing at the games machine;
a storage media (51) storing a table to determine the angle of installation of the display device in relation to the cabinet according to the position of the head of the player playing at the games machine; and
a permitting means (700) permitting automatic adjustment of the angle of installation of the display device in relation to the cabinet with the automatic adjustment mechanism when a predetermined condition is fulfilled, based on a detection results from the head position detection means and the table on the storage media.

14. The games machine according to Claim 13 further comprising:
a game medium detection means (49) detecting game medium supplied as remuneration for play; and wherein
a detection by the game medium detection means is the predetermined condition.

15. The games machine according to Claim 13 further comprising:
a bet setting means (57) setting the number of game medium as remuneration for play; and wherein
a manipulation of the bet setting means is the predetermined condition.

16. The games machine according to one of Claim 13 through Claim 15 further comprising:
an automatic restoration means (700) automatically restoring the installation angle of the display device to a default angle with the adjustment mechanism at a time of completion of play.
